# EUROPEAN PATENT APPLICATION

(11) **EP 4 741 739 A1**
(43) Date of publication of application: **13.05.2026**
(21) Application number: 24835944.0
(22) Date of filing: 24.06.2024
(51) Int. Cl.: F25B 49/02, C09K 5/04, F25B 1/00

(54) **CONTROL DEVICE, REFRIGERATION CYCLE DEVICE, CONTROL METHOD, AND PROGRAM**

(30) Priority: 06.07.2023 JP 2023111677
(71) Applicant: Panasonic Intellectual Property Management Co., Ltd., Kadoma-shi, Osaka 571-0057 (JP)
(72) Inventor: TSUNOYAMA, Hironori, Kadoma-shi, Osaka 571-0057 (JP); NAGAO, Nobuaki, Kadoma-shi, Osaka 571-0057 (JP); MURAKAMI, Hikaru, Kadoma-shi, Osaka 571-0057 (JP); HIWATA, Akira, Kadoma-shi, Osaka 571-0057 (JP); HASHIMOTO, Takahiko, Kadoma-shi, Osaka 571-0057 (JP)
(74) Representative: Eisenführ Speiser
(86) International application number: PCT/JP2024/022847
(87) International publication number: WO 2025/009431

(57) **Abstract**

Provided are a control device, a refrigeration cycle device, a control method, and a program, which enable improvement of suppression of a disproportionation reaction of a working medium. The control device controls a refrigeration cycle circuit which includes a compressor, a condenser, an expansion valve, and an evaporator and allows circulation of a working medium. The control device includes: a drive circuit to drive the compressor; a state detection circuit to detect a state of at least one of the compressor or the drive circuit; a switching device to switch between a first route connecting a discharge pipe of the compressor to the condenser and a second route connecting the discharge pipe of the compressor to a predetermined space decreasing an internal pressure of the compressor to be a predetermined pressure or less; and a control circuit to control the drive circuit and the switching device. The control circuit switches from the first route to the second route by the switching device when the state of at least one of the compressor or the drive circuit detected by the state detection circuit indicates a non-steady state of the refrigeration cycle circuit.

## Description

### TECHNICAL FIELD

The present disclosure relates to control devices, refrigeration cycle devices, control methods, and programs.

### BACKGROUND ART

Conventionally, R410A has been widely used as a working medium (heat medium, refrigerant) for refrigeration cycle devices. However, the global warming potential (GWP) of R410A is as high as 2090. Therefore, from the viewpoint of preventing global warming, research and development of working media with smaller GWPs has been conducted. Patent Document 1 discloses 1,1,2-trifluoroethylene (HFO1123) as a working medium with a smaller GWP than R410A. Patent Document 2 discloses 1,2-difluoroethylene (HFO1132) as a working medium with a smaller GWP than R410A.

HFO1123 and HFO1132 have a smaller GWP than R410A, but are therefore less stable than R410A. For example, the generation of radicals may cause a disproportionation reaction of HFO1123 or HFO1132, resulting in the conversion of HFO1123 and HFO1132 to other compounds.

Patent Document 3 discloses a refrigeration cycle device which aims to improve the reliability of a refrigeration cycle device that uses a working medium containing HFO1123. The refrigeration cycle device disclosed in Patent Document 3 constitutes a refrigeration cycle by annularly connecting a compressor equipped with an electric motor, a condenser, an expansion means, and an evaporator, and by sealing a working medium containing an ethylene-based fluorohydrocarbon having a double bond in the refrigeration cycle. The device further includes a protective device that interrupts the power supply to the compressor when a current value input to the compressor exceeds a predetermined current value, which is set to be at least three times the maximum current value during normal operation other than at start-up, or at least twice the current value at start-up.

### PRIOR ART DOCUMENTS

### PATENT DOCUMENTS

Patent Document 1: WO 2012/157764 A1
Patent Document 2: WO 2012/157765 A1
Patent Document 3: JP 2019-152380 A

### SUMMARY OF THE INVENTION

### PROBLEMS TO BE SOLVED BY THE INVENTION

Patent Document 3 states that "when the current value input to the compressor becomes equal to or greater than a predetermined value, the power supply to the electric motor is stopped, thereby suppressing layer short-circuiting caused by overcurrent and effectively suppressing a disproportionation reaction." The discharge energy that affects the propagation of the disproportionation reaction greatly depends on the internal pressure of the compressor, and when the internal pressure of the compressor is high, the disproportionation reaction may not be sufficiently suppressed.

The present disclosure provides a control device, a refrigeration cycle device, a control method, and a program, which enable improvement of suppression of a disproportionation reaction of a working medium.

### SOLUTIONS TO THE PROBLEMS

A control device according to one aspect of the present disclosure is configured to control a refrigeration cycle circuit which includes a compressor, a condenser, an expansion valve, and an evaporator and allows circulation of a working medium. The control device includes: a drive circuit configured to drive the compressor; a state detection circuit configured to detect a state of at least one of the compressor or the drive circuit; a switching device configured to switch between a first route connecting a discharge pipe of the compressor to the condenser and a second route connecting the discharge pipe of the compressor to a predetermined space decreasing an internal pressure of the compressor to be a predetermined pressure or less; and a control circuit configured to control the drive circuit and the switching device. The control circuit is configured to switch from the first route to the second route by the switching device when the state of at least one of the compressor or the drive circuit detected by the state detection circuit indicates a non-steady state of the refrigeration cycle circuit.

A refrigeration cycle device according to one aspect of the present disclosure includes: the control device; and the refrigeration cycle circuit.

A control method according to one aspect of the present disclosure is performed by a control device for controlling a refrigeration cycle circuit which includes a compressor, a condenser, an expansion valve, and an evaporator and allows circulation of a working medium. The control device includes a drive circuit configured to drive the compressor, and a control circuit configured to control the drive circuit. The control method includes connecting a discharge pipe of the compressor to a predetermined space to decrease an internal pressure of the compressor to a predetermined pressure or less, when a state of at least one of the compressor or the drive circuit indicates a non-steady state of the refrigeration cycle circuit.

A program according to one aspect of the present disclosure is executed by a computer system included in a control device for controlling a refrigeration cycle circuit which includes a compressor, a condenser, an expansion valve, and an evaporator and allows circulation of a working medium. The control device includes a drive circuit configured to drive the compressor, and a control circuit configured to control the drive circuit. The program allows the computer system to connect a discharge pipe of the compressor to a predetermined space to decrease an internal pressure of the compressor to a predetermined pressure or less, when a state of at least one of the compressor or the drive circuit indicates a non-steady state of the refrigeration cycle circuit.

### EFFECTS OF THE INVENTION

Aspects of the present disclosure enables improvement of suppression of a disproportionation reaction of a working medium.

### BRIEF DESCRIPTION OF THE DRAWINGS

Fig. 1 is a block diagram of a refrigeration cycle device according to embodiment 1.
Fig. 2 is a schematic view of a compressor and a control device, of the refrigeration cycle device according to embodiment 1.
Fig. 3 is a waveform chart of a voltage of a smoothing circuit of a drive circuit of the control device according to embodiment 1.
Fig. 4 is a part of a flowchart of an operation of the control device according to embodiment 1.
Fig. 5 is another part of the flowchart of the operation of the control device according to embodiment 1.
Fig. 6 is another part of the flowchart of the operation of the control device according to embodiment 1.
Fig. 7 is another part of the flowchart of the operation of the control device according to embodiment 1.
Fig. 8 is another part of the flowchart of the operation of the control device according to embodiment 1.
Fig. 9 is another part of the flowchart of the operation of the control device according to embodiment 1.
Fig. 10 is a block diagram of a refrigeration cycle device according to embodiment 2.
Fig. 11 is a block diagram of a refrigeration cycle device according to embodiment 3.
Fig. 12 is a flowchart of a first example of an operation of a control device according to embodiment 3.
Fig. 13 is a part of a flowchart of a second example of the operation of the control device according to embodiment 3.
Fig. 14 is a part of a flowchart of a second example of the operation of the control device according to embodiment 3.
Fig. 15 is a schematic view of a control device according to a variation.

### DETAILED DESCRIPTION

### [1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content (e.g., shapes, dimensions, arrangement and the like, of components). Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

In the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.

### [1.1 EMBODIMENT 1]

### [1.1.1 CONFIGURATIONS]

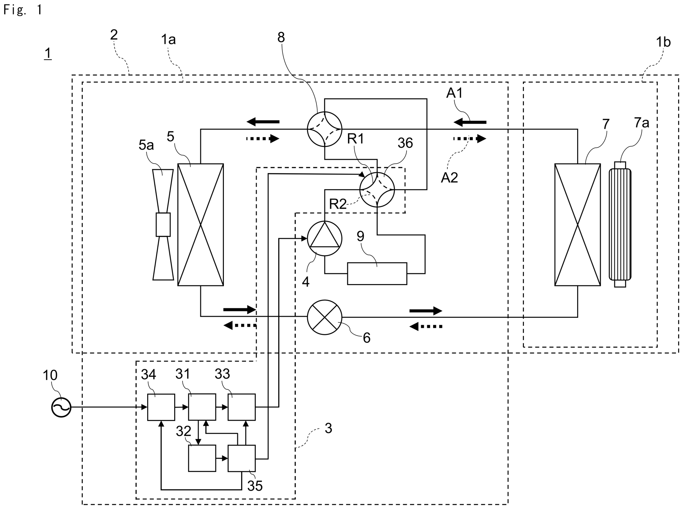

Fig. 1 is a block diagram of a refrigeration cycle device 1 according to the present embodiment. The refrigeration cycle device 1 constitutes an air conditioner enabling a cooling operation and a heating operation, for example. The refrigeration cycle device 1 includes a refrigeration cycle circuit 2 and a control device 3.

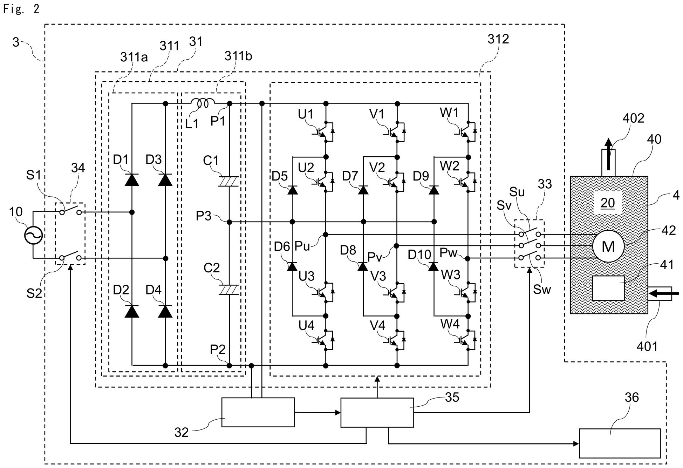

The refrigeration cycle circuit 2 constitutes a fluidic pathway where a working medium 20 (see Fig. 2) circulates. In the present embodiment, the working medium 20 contains ethylene-based fluoroolefin as a refrigerant component. The ethylene-based fluoroolefin may be ethylene-based fluoroolefin likely to undergo a disproportionation reaction. Examples of the ethylene-based fluoroolefin likely to undergo a disproportionation reaction may include 1,1,2-trifluoroethylene (HFO1123), trans-1,2-difluoroethylene (HFO1132(E)), cis-1,2-difluoroethylene (HFO-1132(Z)), 1,1-difluoroethylene (HFO-1132a), tetrafluoroethylene (CF₂=CF₂, FO1114), or monofluoroethylene (HFO-1141).

The working medium 20 may include a variety of refrigerant components. The working medium 20 may contain ethylene-based fluoroolefin as a main refrigerant component, and may further contain one or more chemical compounds other than ethylene-based fluoroolefin as one or more auxiliary refrigerant components. Examples of the auxiliary refrigerant components may include hydrofluorocarbons (HFC), hydrofluoroolefins (HFO), saturated hydrocarbons, and carbon dioxide. Examples of hydrofluorocarbons (HFC) may include difluoromethane, difluoroethane, trifluoroethane, tetrafluoroethane, pentafluoroethane, pentafluoropropane, and heptafluorocyclopentane. Examples of hydrofluoroolefins (HFO) may include monofluoropropene, trifluoropropene, tetrafluoropropene, pentafluoropropene, and hexafluorobutene. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

The working medium 20 may further contain a disproportionation inhibitor for suppressing a disproportionation reaction of the ethylene-based fluoroolefin. Examples of the disproportionation inhibitor may include a saturated hydrocarbon or a haloalkane. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. In the above examples, n-propane is preferred. Examples of haloalkanes may include haloalkanes having one or two carbon atoms. Examples of haloalkanes having one carbon atom (i.e., halomethanes) may include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), dibromodifluoromethane (CBr₂F₂), trifluoroiodomethane (CF₃I), and difluoroiodomethane (CHF₂I). Examples of haloalkanes with two carbon atoms (i.e. haloethanes) may include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). The working medium 20 may contain one or more types of haloalkanes having 1 or 2 carbon atoms. In other words, the haloalkanes having 1 or 2 carbon atoms may be used alone or in combination of two or more types.

Here, an experiment was conducted to verify the occurrence of a disproportionation reaction using a working medium 20 containing 1,1,2-trifluoroethylene (HFO-1123). In the disproportionation reaction experiment, a tightly sealed high-pressure vessel (tightly sealed vessel made with stainless steel, internal volume: 50 mL) was equipped with a pressure sensor (GC61, manufactured by Nagano Keiki Co., Ltd.) for measuring the internal pressure of the high-pressure vessel, a thermocouple (PL Thermocouple Grand PL-18-K-A 4-T, manufactured by Conax Technologies) for measuring the internal temperature of the high-pressure vessel, and a discharge device for generating discharge inside the high-pressure vessel. Furthermore, a gas cylinder of 1,1,2-trifluoroethylene was connected so that the pressure could be adjusted. In addition, a mantle heater was installed to heat the entire high-pressure vessel, and a ribbon heater (Flexible Ribbon Heater 1 m, 200 W, manufactured by Tokyo Research Institute Co., Ltd.) was installed to heat the piping section as well. In this way, the experimental system for the disproportionation reaction was constructed.

TABLE 1 below shows the occurrence or non-occurrence of a disproportionation reaction when using 1,1,2-trifluoroethylene as the working medium 20. The temperature [°C] in TABLE 1 is the internal temperature of the high-pressure vessel. The pressure [MPa] in TABLE 1 is the internal pressure of the high-pressure vessel. The accumulated energy in TABLE 1 is the electrostatic energy accumulated in the capacitor section installed inside the discharge device. The number of consecutive times is the number of times that discharge has been generated at fixed intervals under the given conditions, and if a disproportionation reaction was observed after that number of times, "Yes" is indicated under "occurrence or non-occurrence of disproportionation reaction"; if no disproportionation reaction was observed, "No" is indicated.

**[TABLE 1]**

| | Gas-type | Temperature [°C] | Pressure [MPa] | Accumulated Energy [J] | Number of consecutive times | occurrence or non-occurrence of disproportionation reaction |
|---|---|---|---|---|---|---|
| Example 1 | HFO1123 | 150 | 1.3 | 0.18 | 25 | No |
| Example 2 | HFO1123 | 150 | 2.0 | 0.065 | 50 | No |
| Example 3 | HFO1123 | 150 | 4.0 | 0.065 | 1 | Yes |

From TABLE 1, it was confirmed that no disproportionation reaction occurred in Examples 1 and 2, whereas a disproportionation reaction was observed in Example 3. Accordingly, it was confirmed that the likelihood of occurrence of a disproportionation reaction is very low when the internal pressure is low. TABLE 1 indicates that the higher the internal pressure, the higher the probability that a disproportionation reaction will occur. This suggests that it is preferable to suppress an increase in internal pressure in order to suppress a disproportionation reaction.

The refrigeration cycle circuit 2 includes a compressor 4, a first heat exchanger 5, an expansion valve 6, a second heat exchanger 7, a four-way valve 8, and an accumulator 9.

The refrigeration cycle device 1 includes an outdoor unit 1a and an indoor unit 1b. The outdoor unit 1a includes the control device 3, the compressor 4, the first heat exchanger 5, the expansion valve 6, and the four-way valve 8. The outdoor unit 1a further includes a first air blower 5a for facilitating heat exchange at the first heat exchanger 5. The indoor unit 1b includes the second heat exchanger 7. The indoor unit 1b further includes a second air blower 7a for facilitating heat exchange at the second heat exchanger 7.

In the refrigeration cycle circuit 2, the compressor 4 compresses the working medium 20 to increase a pressure of the working medium 20. The compressor 4 would be described in detail later. The first heat exchanger 5 and the second heat exchanger 7 enable heat exchange between the working medium 20 circulating through the refrigeration cycle circuit 2 and external air (e.g., the outdoor air or the indoor air). The expansion valve 6 regulates the pressure (evaporation pressure) of the working medium 20 and regulates a flow volume of the working medium 20. The four-way valve 8 switches a direction of the working medium 20 circulating through the refrigeration cycle circuit 2 between a first direction corresponding to the cooling operation and a second direction corresponding to the heating operation.

In the present embodiment, as shown by a solid arrow A1 in Fig. 1, the first direction is a direction in which the working medium 20 circulates through the refrigeration cycle circuit 2 in the order of the compressor 4, the four-way valve 8, the first heat exchanger 5, the expansion valve 6, the second heat exchanger 7, the four-way valve 8, and the accumulator 9.

In the cooling operation, the compressor 4 compresses and discharges the gaseous working medium 20, and thus the gaseous working medium 20 is sent to the first heat exchanger 5 through the four-way valve 8. The first heat exchanger 5 conducts heat exchange between the outdoor air and the gaseous working medium 20 and then the gaseous working medium 20 is condensed to be liquefied. The liquid working medium 20 is decompressed by the expansion valve 6 and is sent to the second heat exchanger 7. The second heat exchanger 7 conducts heat exchange between the liquid working medium 20 and the indoor air, and then the liquid working medium 20 evaporates to become the gaseous working medium 20. The gaseous working medium 20 returns to the compressor 4 through the four-way valve 8. In the cooling operation, the first heat exchanger 5 functions as a condenser, and the second heat exchanger 7 functions as an evaporator. Thus, the indoor unit 1b sends air cooled via heat exchange at the second heat exchanger 7 to an interior during cooling.

In the present embodiment, as shown by a broken arrow A2 in Fig. 1, the second direction is a direction in which the working medium 20 circulates through the refrigeration cycle circuit 2 in the order of the compressor 4, the four-way valve 8, the second heat exchanger 7, the expansion valve 6, the first heat exchanger 5, and the accumulator 9.

In the heating operation, the compressor 4 compresses and discharges the gaseous working medium 20, and thus the gaseous working medium 20 is sent to the second heat exchanger 7 through the four-way valve 8. The second heat exchanger 7 conducts heat exchange between the indoor air and the gaseous working medium 20 and then the gaseous working medium 20 is condensed to be liquefied. The liquid working medium 20 is decompressed by the expansion valve 6 and is sent to the first heat exchanger 5. The first heat exchanger 5 conducts heat exchange between the liquid working medium 20 and the outdoor air, and then the liquid working medium 20 evaporates to become the gaseous working medium 20. The gaseous working medium 20 returns to the compressor 4 through the four-way valve 8. In the heating operation, the second heat exchanger 7 functions as a condenser, and the first heat exchanger 5 functions as an evaporator. Thus, the indoor unit 1b sends air warmed via heat exchange at the second heat exchanger 7 to an interior during the heating.

Fig. 2 is a schematic view of the compressor 4 and the control device 3.

The compressor 4 is, for example, a hermetically sealed compressor. The compressor 4 may be of a rotary type, a scroll type, or other well-known type. The compressor 4 includes a tightly sealed vessel 40, a compression mechanism 41, and an electric motor 42.

The tightly sealed vessel 40 constitutes a fluidic pathway for the working medium 20. The tightly sealed vessel 40 includes a suction pipe 401 and a discharge pipe 402. The working medium 20 is suctioned into the tightly sealed vessel 40 via the suction pipe 401 and then is compressed by the compression mechanism 41 and thereafter is discharged to an exterior of the tightly sealed vessel 40 via the discharge pipe 402. The inside of the tightly sealed vessel 40 is filled with the working medium 20 with a high temperature and a high pressure together with a lubricating oil. The tightly sealed vessel 40 has a bottom portion which constitutes an oil reservoir for storing a mixed liquid of the working medium 20 and the lubricating oil.

The compression mechanism 41 is positioned inside the tightly sealed vessel 40 to compress the working medium 20. The compression mechanism 41 may have a conventional configuration. For example, the compression mechanism 41 may include a cylinder forming a compression chamber, a rolling piston disposed in the compression chamber inside the cylinder, and a crank shaft coupled to the rolling piston.

The electric motor 42 is positioned inside the tightly sealed vessel 40 to operate the compression mechanism 41. The electric motor 42 is a brushless motor (three-phase brushless motor). The electric motor 42 includes a rotator fixed to the crank shaft of the compression mechanism 41 and a stator provided in a vicinity of the rotator, for example. The stator is configured by concentrated or distributed winding of the stator windings (magnet wires) around a stator core (electrical or magnetic steel sheet or the like) with an insulation paper in-between. The stator windings are covered with insulating material. Examples of the insulating material may include polyethylene terephthalate (PET), polyethylene naphthalate (PEN), aramid polymer, polyphenylene sulfide (PPS), and polytetrafluoroethylene (PTFE).

The accumulator 9 is provided for preventing liquid compression in the compression chamber of the compression mechanism 41. The accumulator 9 is positioned closer to the suction pipe 401 of the compressor 4. In detail, the accumulator 9 is positioned between the suction pipe 401 of the compressor 4 and the four-way valve 8. The accumulator 9 separates the working medium 20 into the gaseous working medium 20 and the liquid working medium 20 and directs only the gaseous working medium 20 to the tightly sealed vessel 40 via the suction pipe 401.

The control device 3 is configured to control the compressor 4 of the refrigeration cycle circuit 2. The control device 3 includes a drive circuit 31, a state detection circuit 32, a first protective device 33, a second protective device 34, a control circuit 35, and a switching device 36.

With reference to Fig. 1, the switching device 36 will be described. The switching device 36 constitutes part of the refrigeration cycle circuit 2. The switching device 36 is switchable between a first route R1 and a second route R2. In the present embodiment, the switching device 36 is a four-way valve. The switching device 36 is positioned between the compressor 4 and the four-way valve 8. The switching device 36 is connected to the first heat exchanger 5 by the four-way valve 8 in the cooling operation. The switching device 36 is connected to the second heat exchanger 7 by the four-way valve 8 in the heating operation. The first heat exchanger 5 during the cooling operation and the second heat exchanger 7 during the heating operation both serve as condensers. Therefore, the switching device 36 is positioned between the compressor 4 and a condenser.

The first route R1 connects the discharge pipe 402 of the compressor 4 to the first heat exchanger 5 during the cooling operation, and to the second heat exchanger 7 during the heating operation. In other words, the first route R1 connects the discharge pipe 402 of the compressor 4 to the condenser. Further, the first route R1 connects the accumulator 9 to the second heat exchanger 7 during the cooling operation and to the first heat exchanger 5 during the heating operation. The second heat exchanger 7 during the cooling operation and the first heat exchanger 5 during the heating operation both serve as evaporators. Accordingly, the first route R1 connects an evaporator to the accumulator 9. In the first route R1, a route connecting the discharge pipe 402 of the compressor 4 to the condenser and another route connecting the evaporator to the accumulator 9 are independent of each other.

The second route R2 connects the discharge pipe 402 of the compressor 4 to a predetermined space. The predetermined space is set to reduce or decrease the internal pressure of the compressor 4 to be equal to or lower than a predetermined pressure. The predetermined pressure is set so that substantially no heat exchange occurs in the first heat exchanger 5 or the second heat exchanger 7 during the heating operation. As one example, the predetermined space is a space having a pressure of 0.4 MPa or less. The predetermined pressure is, for example, 3.0 MPa or less. The predetermined space is located inside the refrigeration cycle circuit 2. The predetermined space is an internal space of the accumulator 9. The second route R2 connects the discharge pipe 402 of the compressor 4 to the accumulator 9. As a result, the discharge pipe 402 of the compressor 4 is connected to the suction pipe 401 of the compressor 4 via the accumulator 9. Further, the second route R2 connects the evaporator to the condenser via the four-way valve 8. In the second route R2, a route connecting the discharge pipe 402 of the compressor 4 to the accumulator 9 and another route connecting the evaporator to the condenser are independent of each other.

As discussed above, the switching device 36 constitutes a pressure control mechanism configured to reduce the internal pressure of the compressor 4 to the predetermined value or lower by switching the connection destination of the discharge pipe 402 of the compressor 4 from the condenser to the predetermined space.

Next, with reference to Fig. 2, explanations will be made to the drive circuit 31, the state detection circuit 32, the first protective device 33, the second protective device 34, and the control circuit 35.

The drive circuit 31 is configured to drive the electric motor 42 based on input power from a power supply 10. In the present embodiment, the power supply 10 is an alternating current power supply and the input power is AC power. The drive circuit 31 includes a converter circuit 311 and an inverter circuit 312.

The converter circuit 311 is configured to output DC output power based on the input power from the power supply 10 so that a voltage of the DC output power becomes a first voltage. This means that the converter circuit 311 converts the input power into the DC output power so that the voltage of the DC output power becomes the first voltage. The first voltage corresponds to a rated voltage of the drive circuit 31.

The converter circuit 311 includes a rectification circuit 311a and a smoothing circuit 311 b.

The rectification circuit 311a is a diode bridge constituted by a plurality of diodes D1 to D4. The power supply 10 is connected between input terminals (a connecting point between the diodes D1, D2 and a connecting point between the diodes D3, D4) of the rectification circuit 311a and the smoothing circuit 311b is connected between output terminals (a connecting point between the diodes D1, D3 and a connecting point between the diodes D2, D4) of the rectification circuit 311a.

The smoothing circuit 311b smooths a voltage between the output terminals of the rectification circuit 311a to output it. By the smoothing circuit 311b, the voltage of the DC output power is set to the first voltage. The smoothing circuit 311b includes a series circuit of an inductor L1 and smoothing capacitors C1 and C2. In the smoothing circuit 311b, a connecting point between the inductor L1 and the smoothing capacitor C1 corresponds to a first output point P1 outputting a voltage corresponding to the first voltage. In the smoothing circuit 311b, a connecting point between the connecting point between the diodes D2, D4 and the smoothing capacitor C2 corresponds to a second output point P2 outputting a voltage lower than the voltage at the first output point P1. In the smoothing circuit 311b, a connecting point between the smoothing capacitor C1 and the smoothing capacitor C2 corresponds to a third output point P3 outputting a voltage between the voltage at the first output point P1 and the voltage at the second output point P2. In a relation among the first output point P1, the second output point P2 and the third output point P3, the first output point P1 is a high voltage point, the second output point P2 is a low voltage point and the third output point P3 is an intermediate voltage point. In the smoothing circuit 311 b, the smoothing capacitor C1 and the smoothing capacitor C2 have the same capacitance. Therefore, a voltage between the first output point P1 and the third output point P3 and a voltage between the second output point P2 and the third output point P3 are equal. If the voltage between the first output point P1 and the second output point P2 (which corresponds to the first voltage) is denoted as E, then the voltage between the first output point P1 and the third output point P3 is E/2, and similarly, the voltage between the second output point P2 and the third output point P3 is also E/2. Accordingly, the drive circuit 31 is capable of providing five voltage levels: E, E/2, 0, - E/2, and -E.

The inverter circuit 312 outputs AC output power to the electric motor 42 based on the DC output power from the converter circuit 311. In the present embodiment, the AC output power is three-phase AC power. The inverter circuit 312 includes a plurality of semiconductor switching elements U1 to U4, V1 to V4, and W1 to W4. The semiconductor switching elements U1 to U4, V1 to V4, and W1 to W4 are, for example, transistors or the like.

Each set of the semiconductor switching elements U1 to U4, V1 to V4, and W1 to W4 forms a series circuit and is connected between the first output point P1 and the second output point P2.

A connecting point between the semiconductor switching elements U1 and U2, a connecting point between the semiconductor switching elements V1 and V2, and a connecting point between the semiconductor switching elements W1 and W2 are connected to the third output point P3 via diodes D5, D7, and D9, respectively.

Anodes of the diodes D5, D7, and D9 are connected to the third output point P3, and cathodes of the diodes D5, D7, and D9 are connected to a connecting point between the semiconductor switching elements U1 and U2, a connecting point between the semiconductor switching elements V1 and V2, and a connecting point between the semiconductor switching element W1 and W2, respectively.

A connecting point between the semiconductor switching elements U2 and U3 constitutes a U-phase output terminal Pu, which is connected to a U-phase input terminal of the electric motor 42. A connecting point between the semiconductor switching elements V2 and V3 constitutes a V-phase output terminal Pv, which is connected to a V-phase input terminal of the electric motor 42. The connecting point between the semiconductor switching elements W2 and W3 constitutes a W-phase output terminal Pw, which is connected to a W-phase input terminal of the electric motor 42.

A connecting points between the semiconductor switching elements U3 and U4, a connecting points between the semiconductor switching elements V3 and V4, and a connecting points between the semiconductor switching elements W3 and W4 are connected to the third output point P3 via diodes D6, D8, and D10, respectively.

Cathodes of the diodes D6, D8, and D10 are connected to the third output point P3, and anodes of the diodes D6, D8, and D10 are connected to a connecting points between the semiconductor switching elements U3 and U4, a connecting points between the semiconductor switching elements V3 and V4, and a connecting points between the semiconductor switching elements W3 and W4, respectively.

In the inverter circuit 312, the semiconductor switching elements U1, U2, V1, V2, W1, and W2 constitute a first semiconductor switching element group connected between the first output point P1 and the electric motor 42. In particular, the semiconductor switching elements U1 and U2 constitute a U-phase first semiconductor switching element group connected between the first output point P1 and the U-phase input terminal of the electric motor 42. The semiconductor switching elements V1 and V2 constitute a V-phase first semiconductor switching element group connected between the first output point P1 and the V-phase input terminal of the electric motor 42. The semiconductor switching elements W1 and W2 constitute a W-phase first semiconductor switching element group connected between the first output point P1 and the W-phase input terminal of the electric motor 42.

The semiconductor switching elements U3, U4, V3, V4, W3, and W4 constitute a second semiconductor switching element group connected between the second output point P2 and the electric motor 42. In particular, the semiconductor switching elements U3 and U4 constitute a U-phase second semiconductor switching element group connected between the second output point P2 and the U-phase input terminal of the electric motor 42. The semiconductor switching elements V3 and V4 constitute a V-phase second semiconductor switching element group connected between the second output point P2 and the V-phase input terminal of the electric motor 42. The semiconductor switching elements W3 and W4 constitute a W-phase second semiconductor switching element group connected between the second output point P2 and the W-phase input terminal of the electric motor 42.

The semiconductor switching elements U2, U3, V2, V3, W2, and W3 constitute a third semiconductor switching element group connected between the third output point P3 and the electric motor 42. In particular, the semiconductor switching elements U2 and U3 constitute a U-phase third semiconductor switching element group connected between the third output point P3 and the U-phase input terminal of the electric motor 42. The semiconductor switching elements V2 and V3 constitute a V-phase third semiconductor switching element group connected between the third output point P3 and the V-phase input terminal of the electric motor 42. The semiconductor switching elements W2 and W3 constitute a W-phase third semiconductor switching element group connected between the third output point P3 and the W-phase input terminal of the electric motor 42.

The converter circuit 311 has a plurality of output points, including the first to third output points P1 to P3. The inverter circuit 312 includes a plurality of semiconductor switching element groups: the first semiconductor switching element group (the semiconductor switching elements U1, U2, V1, V2, W1, W2) connected between the first output point P1 and the electric motor 42; the second semiconductor switching element group (the semiconductor switching elements U3, U4, V3, V4, W3, W4) connected between the second output point P2 and the electric motor 42; and the third semiconductor switching element group (the semiconductor switching elements U2, U3, V2, V3, W2, W3) connected between the third output point P3 and the electric motor 42. The drive circuit 31 is a so-called multilevel inverter, specifically a three-level inverter.

The state detection circuit 32 is configured to detect a state of at least one of the compressor 4 or the drive circuit 31. In the present embodiment, the state detection circuit 32 is configured to detect a state of the drive circuit 31. The state of the drive circuit 31 is the voltage of the DC output power of the converter circuit 311. In the present embodiment, the state detection circuit 32 is a voltage detector configured to detect the DC output power of the converter circuit 311 and outputs a detection voltage indicating the voltage of the DC output power. In the present embodiment, the state detection circuit 32 includes a voltage divider circuit connected between the output terminals of the smoothing circuit 311b of the converter circuit 311, that is, between the first output point P1 and the second output point P2, and outputs the detection voltage based on a voltage acquired from the voltage divider circuit. The state detection circuit 32 may also output the detection voltage based on outputs of the voltage divider circuit and a differential amplifier. As an example, a non-inverting input terminal and an inverting input terminal of the differential amplifier are connected to both ends of a resistor of the voltage divider circuit, respectively, so that the differential amplifier can output the voltage across the resistor as the detection voltage. By using a differential amplifier, it is possible to detect the potential difference in a floating state, thereby improving the accuracy of the detection voltage. The position at which the state detection circuit 32 is connected to the drive circuit 31 is not particularly limited as long as the DC output power of the converter circuit 311 can be detected. The position for detecting the DC output power of the converter circuit 311 is not limited to inside the converter circuit 311; it may also be at a position inside the inverter circuit 312 that is circuit-equivalent to each of the first output point P1 and the second output point P2. The voltage divider circuit may adopt a conventionally known configuration, so detailed explanation is omitted.

The first protective device 33 is provided to interrupt outputting the AC output power. The first protective device 33 includes switches Su, Sv, and Sw, which are interposed between the drive circuit 31 and the electric motor 42. The switches Su, Sv, and Sw are connected between the input terminals of the U phase, V phase, and W phase of the electric motor 42 and the U-phase output terminal Pu, the V-phase output terminal Pv, and the W-phase output terminal Pw, respectively. The switches Su, Sv, and Sw may be, for example, controllable switches such as semiconductor switches, electromagnetic relays. In an ON state, where the switches Su, Sv, and Sw are closed, the first protective device 33 allows outputting the AC output power from the drive circuit 31 to the electric motor 42, and in an OFF state, where the switches Su, Sv, and Sw are open, it interrupts outputting the AC output power from the drive circuit 31 to the electric motor 42.

The second protective device 34 is provided to interrupt inputting the input power. The second protective device 34 includes switches S1 and S2, which are interposed between the drive circuit 31 and the power supply 10. The switches S1 and S2 are connected between the input terminals of the rectification circuit 311a and the power supply 10, respectively. The switches S1 and S2 may be, for example, controllable switches such as semiconductor switches, electromagnetic relays. In an ON state, where the switches S1 and S2 are closed, the second protective device 34 allows inputting the input power from the power supply 10 to the drive circuit 31, and in an OFF state, where the switches S1 and S2 are open, it interrupts inputting the input power from the power supply 10 to the drive circuit 31.

The control circuit 35 may be implemented by a computer system including at least one processor (microprocessor) and at least one memory. The computer system may also include one or more A/D converters. For example, one or more A/D converters may be used to convert the detection voltage from the state detection circuit 32 from analog format to digital format. The control circuit 35 controls the drive circuit 31, the first protective device 33, the second protective device 34, and the switching device 36. Specifically, the control circuit 35 performs PWM control of the plurality of semiconductor switching element groups of the inverter circuit 312 of the drive circuit 31 to allow the drive circuit 31 to operate the electric motor 42. More specifically, the control circuit 35 controls the switching of the plurality of semiconductor switching elements U1 to U4, V1 to V4, and W1 to W4 of the inverter circuit 312 of the drive circuit 31 so that the inverter circuit 312 supplies AC output power (three-phase AC power) to the electric motor 42 based on the DC output power from the smoothing circuit 311b.

The semiconductor switching elements U1 to U4 have a first state in which the semiconductor switching elements U1 and U2 are ON and the semiconductor switching elements U3 and U4 are OFF, a second state in which the semiconductor switching elements U3 and U4 are ON and the semiconductor switching elements U1 and U2 are OFF, and a third state in which the semiconductor switching elements U2 and U3 are ON and the semiconductor switching elements U1 and U4 are OFF. The voltage at the U-phase output terminal Pu is E/2 in the first state, -E/2 in the second state, and 0 in the third state.

The semiconductor switching elements V1 to V4 have a first state in which the semiconductor switching elements V1 and V2 are ON and the semiconductor switching elements V3 and V4 are OFF, a second state in which the semiconductor switching elements V3 and V4 are ON and the semiconductor switching elements V1 and V2 are OFF, and a third state in which the semiconductor switching elements V2 and V3 are ON and the semiconductor switching elements V1 and V4 are OFF. The voltage at the V-phase output terminal Pv is E/2 in the first state, -E/2 in the second state, and 0 in the third state.

The semiconductor switching elements W1 to W4 have a first state in which the semiconductor switching elements W1 and W2 are ON and the semiconductor switching elements W3 and W4 are OFF, a second state in which the semiconductor switching elements W3 and W4 are ON and the semiconductor switching elements W1 and W2 are OFF, and a third state in which the semiconductor switching elements W2 and W3 are ON and the semiconductor switching elements W1 and W4 are OFF. The voltage at the W-phase output terminal Pw is E/2 in the first state, -E/2 in the second state, and 0 in the third state.

In this way, the drive circuit 31 can provide five voltage levels: E, E/2, 0, -E/2, and -E.

The control circuit 35 controls the switching of the semiconductor switching elements U1 to U4, V1 to V4, and W1 to W4 of the inverter circuit 312 of the drive circuit 31, based on, for example, the U-phase, V-phase, and W-phase output voltage command values respectively corresponding to the U-phase, V-phase, and W-phase sinusoidal AC voltages of the three-phase AC, as well as first and second carrier triangular waves. A value of the first carrier triangular wave is greater than or equal to 0, and a value of the second carrier triangular wave is less than or equal to 0. Since the drive circuit 31 can provide five-level voltages of E, E/2, 0, -E/2, and -E, the voltage between the U-phase input terminal and the V-phase input terminal of the electric motor 42, the voltage between the V-phase input terminal and the W-phase input terminal of the electric motor 42, and the voltage between the W-phase input terminal and the U-phase input terminal of the electric motor 42 can each be made closer to a sinusoidal waveform.

The control circuit 35 is configured to, when the state of at least one of the compressor 4 or the drive circuit 31 detected by the state detection circuit 32 indicates a non-steady state of the refrigeration cycle circuit 2, performs a process for suppressing a disproportionation reaction of the working medium 20 circulating through the refrigeration cycle circuit 2. Examples of the non-steady state of the refrigeration cycle circuit 2 include: abnormality in at least one of the compressor 4 or the drive circuit 31; a state in which a discharge phenomenon that may cause a disproportionation reaction of the working medium 20 circulating through the refrigeration cycle circuit 2 has occurred or may occur; or a state in which a disproportionation reaction of the working medium 20 circulating through the refrigeration cycle circuit 2 is in progress or may progress.

In the present embodiment, the control circuit 35 further performs a process for suppressing the disproportionation reaction of the working medium 20 that circulates through the refrigeration cycle circuit 2, based on the detection voltage from the state detection circuit 32.

It is considered that factors of the disproportionation reaction of the working medium 20 are heat and radicals. For example, when radicals are generated under high temperature and high pressure, it is assumed that the disproportionation reaction of the working medium 20 proceeds. The radicals may possibly be generated by a discharge phenomenon occurring, for example, when some abnormality happens in the compressor 4 or the drive circuit 31.

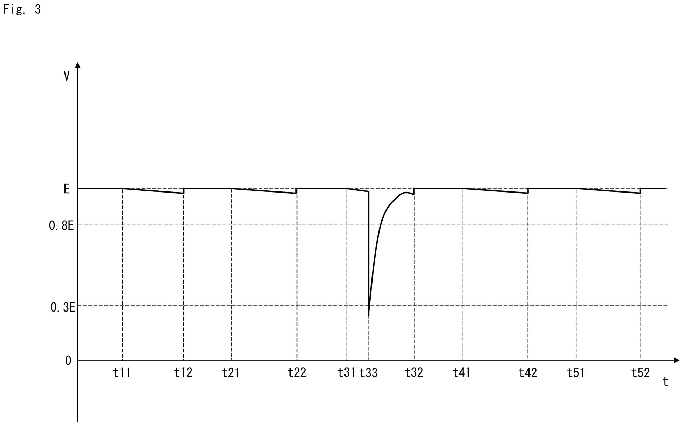

The present inventors found that when a discharge phenomenon occurs in the compressor 4, the voltage of the DC output power of the converter circuit 311, that is, the voltage of the smoothing circuit 311b of the drive circuit 31, undergoes an abrupt change. Fig. 3 shows a waveform diagram of the DC output voltage of the converter circuit 311. In Fig. 3, during times t11 to t12, t21 to t22, t31 to t32, t41 to t42, and t51 to t52, the DC output voltage gently decreases, which is due to switching of the semiconductor switching elements U1 to U4, V1 to V4, W1 to W4 of the inverter circuit 312. When the switching frequency of the inverter circuit 312 is, for example, 1.0 kHz to 5.0 kHz, the time between the times t11 and t21 is about 0.2 to 1.0 ms. Here, at the time t33, a steep drop in the DC output voltage is observed, and this is considered to result from the occurrence of a discharge phenomenon.

From this perspective, the control circuit 35 determines whether a discharge phenomenon has occurred based on the detection voltage from the state detection circuit 32, and when it is determined that a discharge phenomenon is occurring, the control circuit 35 switches from the first route R1 to the second route R2 by the switching device 36 so as to suppress the disproportionation reaction of the working medium 20 circulating through the refrigeration cycle circuit 2.

In the control device 3, detection of the sign of the disproportionation reaction is carried out not based on changes in the actual current flowing from the drive circuit 31 to the electric motor 42, but instead based on changes in the DC output power (the voltage of the smoothing circuit 311b) within the drive circuit 31. The timescale of a discharge phenomenon is shorter than the timescale for smoothing (rectification) in the drive circuit 31. For example, the timescale of a discharge phenomenon is on the order of microseconds. Therefore, it is possible to determine whether a discharge phenomenon has occurred by monitoring the DC output power within the drive circuit 31. Moreover, measurement of the DC output power (the voltage of the smoothing circuit 311b) within the drive circuit 31 can be conducted in a shorter time and with shorter cycles than measurement of the actual current flowing from the drive circuit 31 to the electric motor 42. This enables earlier detection of the sign of the disproportionation reaction of the working medium 20. In this way, if the sign of the disproportionation reaction of the working medium 20 can be detected at an earlier stage, suppression of the disproportionation reaction can also be initiated earlier, thereby improving the effectiveness of the disproportionation reaction suppression.

In the present embodiment, when the detection voltage falls below a second voltage that is lower than the first voltage, the control circuit 35 switches from the first route R1 to the second route R2 by the switching device 36. The second voltage is set in order to determine whether a discharge phenomenon has occurred due to some abnormality in the compressor 4 or the drive circuit 31. Referring to Fig. 3, if the normal voltage (the first voltage) of the DC output current is taken as E, it is observed that, due to a discharge phenomenon, the voltage of the DC output current drops to 0.8E or less, and sometimes as low as 0.3E or less. From this point, it is preferable that the second voltage be between 0.3 and 0.8 times the first voltage, inclusive. In the present embodiment, the second voltage is set at 0.8 times the first voltage.

The control circuit 35 switches from the first route R1 to the second route R2 by the switching device 36 to reduce the internal pressure of the compressor 4 to the predetermined pressure or less. The reduction or decrease in the internal pressure of the compressor 4 causes an increase in the discharge energy necessary for progress of the disproportionation reaction. Thus, it is possible to improve the suppression of the disproportionation reaction. In a disproportionation reaction triggered by discharge, there is an induction period between the occurrence of the discharge and the rapid propagation of the reaction, and the disproportionation inhibitor can extend this induction period. Therefore, when the working medium 20 contains the disproportionation inhibitor, the possibility that the disproportionation reaction will proceed before the control circuit 35 lowers the internal pressure of the compressor 4 can be reduced. As a result, through both the reduction in the internal pressure of the compressor 4 and the prolongation of the induction period, the disproportionation reaction of the working medium 20 can be suppressed more effectively.

When the detection voltage falls below the second voltage which is equal to or lower than the first voltage, the control circuit 35 interrupts or limits the operation of the drive circuit 31 in addition to switching from the first route R1 to the second route R2 by the switching device 36.

The interrupting the operation of the drive circuit 31 can be realized by any of interrupting outputting the AC output power, interrupting outputting the DC output power, or interrupting inputting the input power. The limiting the operation of the drive circuit 31 can be realized by reducing a setting value of an amplitude of the AC output power or reducing a setting value of a frequency of the AC output power.

In the present embodiment, the control circuit 35 sets the first protective device 33 to the OFF state to electrically disconnect the electric motor 42 from the drive circuit 31 and thereby interrupt outputting the AC output power. To restart outputting the AC output power, the control circuit 35 sets the first protective device 33 to the ON state to connect the electric motor 42 to the drive circuit 31.

In the present embodiment, the control circuit 35 controls the drive circuit 31 to decrease the setting value of the amplitude of the AC output power. In the present embodiment, since the drive circuit 31 can provide five voltage levels of E, E/2, 0, -E/2, and -E, the setting value of the amplitude of the AC output power is changed from E to E/2. In this case, the rotational speed of the electric motor 42 decreases compared to when the setting value of the amplitude of the AC output power is E.

If inputting the input power is interrupted, outputting the AC output power is interrupted as a result. In the present embodiment, the control circuit 35 sets the second protective device 34 to the OFF state to electrically disconnect the power supply 10 from the drive circuit 31 and thereby interrupt outputting the AC output power. To restart inputting the input power, the control circuit 35 sets the second protective device 34 to the ON state to connect the power supply 10 to the drive circuit 31.

The control circuit 35 interrupts or limits the operation of the drive circuit 31 in a different way according to the number of times that the detection voltage has fallen below the second voltage. In particular, the control circuit 35 performs a process with a higher degree of suppression of the disproportionation reaction as the number of times that the detection voltage falls below the second voltage becomes greater. This allows the control device 3 to suppress the disproportionation reaction even if relatively minor discharge phenomena occur continuously in a short time. For example, this prevents induction of the disproportionation reaction by exceeding a predetermined energy due to continuous low-energy abnormal states (discharges), thereby improving the safety of use of the working medium 20.

The control circuit 35 also interrupts or limits the operation of the drive circuit 31 in a different way according to a time difference between a first time when the detection voltage first falls below the second voltage and a second time when the detection voltage falls below the second voltage next time. In particular, the control circuit 35 performs a process with a higher degree of suppression of the disproportionation reaction as the time difference becomes shorter. Thus, the control device 3 can suppress the disproportionation reaction even if relatively minor discharge phenomena occur continuously in a short time. For example, this prevents induction of a disproportionation reaction by exceeding a certain energy due to continuously occurring low-energy abnormal states (discharges), improving safety in the use of the working medium 20.

The process for suppressing the disproportionation reaction may include, for example, a first process to a third process. The first process is a process of interrupting outputting the AC output power and after a lapse of a waiting period, restarting outputting the AC output power. The second process is a process of interrupting outputting the AC output power and after a lapse of a waiting period, restarting the operation with a reduced setting value of the amplitude of the AC output power. The third process is a process of interrupting outputting the AC output power and interrupting inputting the input power. Among the first to third processes, the degree of suppression of the disproportionation reaction is higher in the order of the third, the second, and the first processes. Even in the first or second processes, the longer the waiting period, the higher the degree of the disproportionation suppression.

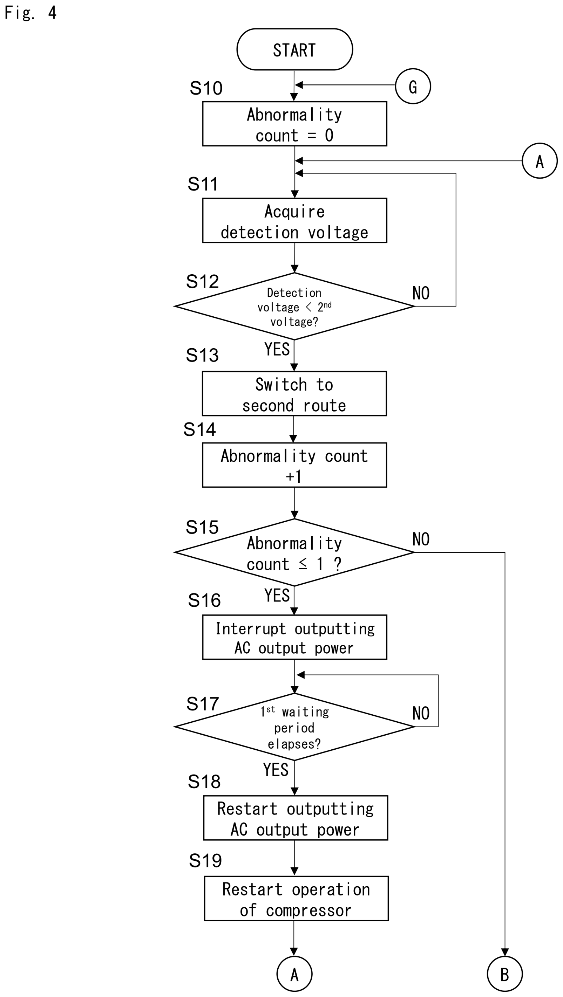

Next, an example of the operation of the control circuit 35 of the control device 3 will be briefly explained with reference to Figs. 4 to 9. Each of Figs. 4 to 9 represents a part of a flowchart showing the operation of the control circuit 35 of the control device 3, and a complete flowchart is acquired by combining Figs. 4 to 9.

Referring to Fig. 4, the control circuit 35 outputs the AC output power to the electric motor 42 based on the input power from the power supply 10 by use of the drive circuit 31, thereby driving the compressor 4. The control circuit 35 sets an abnormality count to zero (S10). The abnormality count indicates the number of times that the detection voltage has fallen below the second voltage. A higher abnormality count serves as an indicator of a higher likelihood of occurrence of the disproportionation reaction.

The control circuit 35 acquires the detection voltage from the state detection circuit 32 (S11). The control circuit 35 determines whether the detection voltage falls below the second voltage (S12).

If the detection voltage does not fall below the second voltage (S12: NO), the process returns to step S10. Through steps S11 and S12, the control circuit 35 determines, at a predetermined interval, whether the detection voltage falls below the second voltage. It is preferable that this predetermined interval be shorter than the period corresponding to the reference frequency (e.g., 1000 to 5000 Hz) of the inverter circuit 312.

If, in step S12, the detection voltage falls below the second voltage (S12: YES), the control circuit 35 switches from the first route R1 to the second route R2 by the switching device 36 (S13). Thus, the control circuit 35 reduces the internal pressure of the compressor 4 to the predetermined pressure or less. The reduction of the internal pressure of the compressor 4 causes an increase in the discharge energy necessary for promoting the disproportionation reaction, and therefore the disproportionation reaction can be suppressed. Further, the control circuit 35 increments the abnormality count by one (S14) and determines whether the abnormality count is one or less (S15).

If, in step S15, the abnormality count is one or less (S15: YES), the control circuit 35 sets the first protective device 33 to the OFF state to interrupt outputting the AC output power (S16). The control circuit 35 then determines whether first waiting period has elapsed after the interruption of outputting the AC output power (S17). The first waiting period is, for example, 1 second. When the first waiting period has elapsed (S17: YES), the control circuit 35 sets the first protective device 33 to the ON state to restart outputting the AC output power (S18) and switch from the second route R2 to the first route R1 by the switching device 36, thereby restarting the operation of the compressor 4 (S19). Thereafter, the process returns to step S11.

In this way, the control circuit 35 switches from the first route R1 to the second route R2 by the switching device 36 to reduce the internal pressure of the compressor 4 to the predetermined pressure or lower, when the detection voltage falls below the second voltage. Further, the control circuit 35 interrupts outputting the AC output power. The control circuit 35 restarts outputting the AC output power after the first waiting period has elapsed.

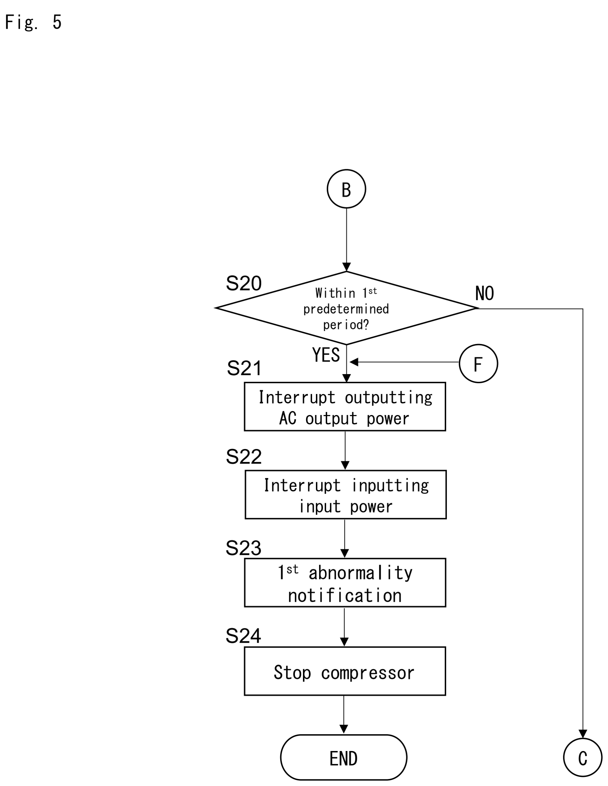

If, in step S15, the abnormality count is greater than one (S15: NO), referring to Fig. 5, the control circuit 35 determines whether the time difference between the first time when the detected voltage first falls below the second voltage and the second time when the detection voltage falls below the second voltage next time is within a first predetermined period (step S20). A shorter time difference serves as an indicator of a higher likelihood of occurrence of the disproportionation reaction. The first predetermined period is, for example, about 100 times the period corresponding to the reference frequency of the inverter circuit 312, i.e., about 20 to 100 ms.

If in step S20 the time difference is within the first predetermined period (step S20: YES), the control circuit 35 sets the first protective device 33 to the OFF state to interrupt outputting the AC output power (S21). The control circuit 35 sets the second protective device 34 to the OFF state to interrupt inputting the input power (S22). The control circuit 35 outputs a first abnormality notification (S23). The first abnormality notification indicates that an abnormality with a very high likelihood of causing the disproportionation reaction in the refrigeration cycle device 1 has occurred. The first abnormality notification is output to, for example, a control circuit of the indoor unit 1b and a remote controller, etc. After this, the control circuit 35 interrupts the operation of the compressor 4 (S24).

In this way, if the detection voltage falls below the second voltage before a predetermined period (the first predetermined period) elapses after restart (S18) of outputting the AC output power after a lapse of the first waiting period (S20: YES), the control circuit 35 interrupts outputting the AC output power (S21) and interrupts inputting the input power (S22).

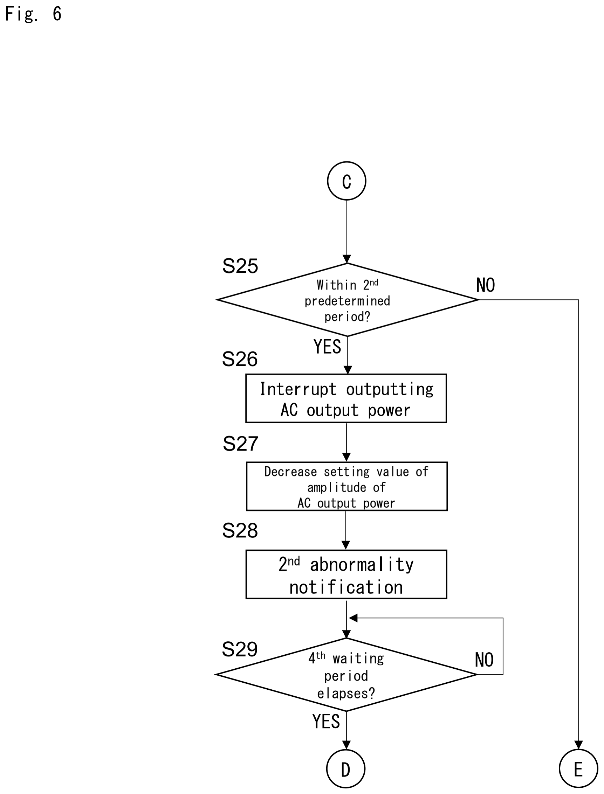

If in step S20 the time difference is not within the first predetermined period (S20: NO), referring to Fig. 6, the control circuit 35 determines whether the time difference is within a second predetermined period that is longer than the first predetermined period (step S25). The second predetermined period is, for example, about 1,000 times the period corresponding to the reference frequency of the inverter circuit 312, i.e., about 200 ms to 1 s.

If in step S25 the time difference is within the second predetermined period (S25: YES), the control circuit 35 sets the first protective device 33 to the OFF state to interrupt outputting the AC output power (S26). The control circuit 35 changes the switching control of the semiconductor switching elements of the drive circuit 31 so that the setting value of the amplitude of the AC output power is reduced from E to E/2 (S27). The control circuit 35 outputs a second abnormality notification (S28). The second abnormality notification indicates that an abnormality with a high likelihood of causing the disproportionation reaction has occurred in the refrigeration cycle device 1. The second abnormality notification is output, for example, to the control circuit of the indoor unit 1b and to a remote controller.

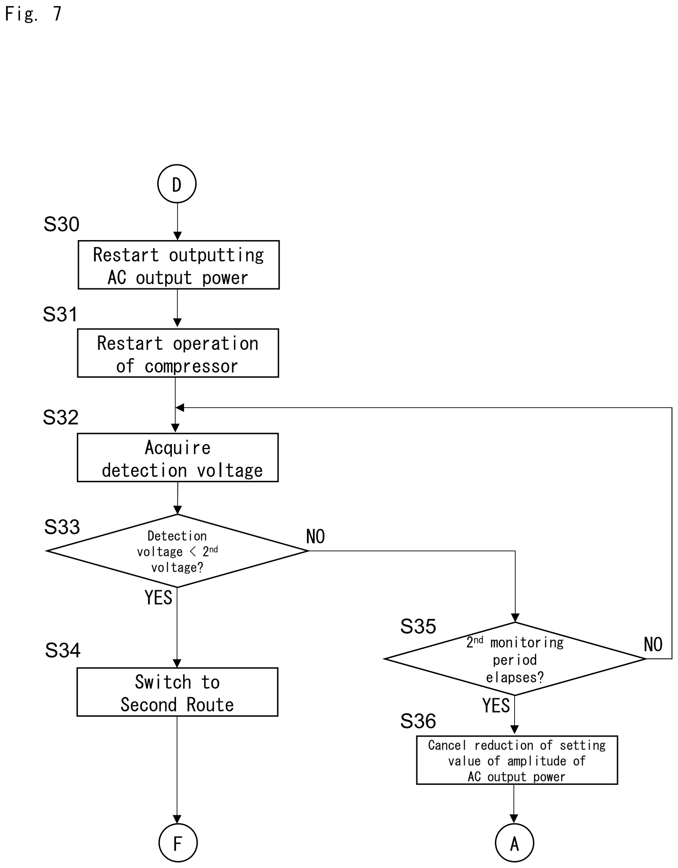

The control circuit 35 determines whether fourth waiting period has elapsed after the interruption of outputting the AC output power (S29). The fourth waiting period is longer than the first waiting period and is, for example, 60 seconds. When the fourth waiting period has elapsed (S29: YES), as shown in Fig. 7, the control circuit 35 sets the first protective device 33 to the ON state to restart outputting the AC output power (S30) and switches from the second route R2 to the first route R1 by the switching device 36, thereby restarting the operation of the compressor 4 (S31). In this case, the setting value of the amplitude of the AC output power remains reduced from E to E/2.

Thus, if the detection voltage falls below the second voltage before a prescribed period (the second predetermined period) elapses after restart (S18) of outputting the AC output power after a lapse of the first waiting period, the control circuit 35 interrupts outputting the AC output power (S26) and reduces the setting value of the amplitude of the AC output power (S27). If the fourth waiting period, which is longer than the first waiting period, elapses after the interruption of outputting the AC output power, the control circuit 35 restarts outputting the AC output power while keeping the setting value of the amplitude reduced (S30).

Thereafter, the control circuit 35 acquires the detection voltage from the state detection circuit 32 (S32) and determines whether the detection voltage falls below the second voltage (S33).

If, in step S33, the detection voltage falls below the second voltage (S33: YES), the control circuit 35 switches from the first route R1 to the second route R2 by the switching device 36 (S34) and the process proceeds to step S20 in Fig. 5.

If in step S33 the detection voltage does not fall below the second voltage (S33: NO), the control circuit 35 determines whether a second monitoring period has elapsed since restart of the operation of the compressor 4 (S35).

If in step S35 the second monitoring period has elapsed since restart of the operation of the compressor 4 (S35: YES), the control circuit 35 cancels the reduction of the setting value of the amplitude of the AC output power and returns the setting value of the amplitude to E (S36), and the process proceeds to step S11 in Fig. 4.

If in step S35 the second monitoring period has not elapsed since restart of the operation of the compressor 4 (S35: NO), the process returns to step S32.

In steps S32 to S34, if the detection voltage falls below the second voltage before the second monitoring period has elapsed since restart of the operation of the compressor 4, the process proceeds to step S21 in Fig. 5. If the detection voltage does not fall below the second voltage before the end of the second monitoring period after the restart of the operation of the compressor 4, the process proceeds to step S36.

In this way, if the detection voltage does not fall below the second voltage during the second monitoring period after the restart (S30) of the outputting the AC output power after a lapse of the fourth waiting period (S35: YES), the control circuit 35 cancels the reduction of the setting value of the amplitude of the AC output power (S36). If the detection voltage falls below the second voltage before the second monitoring period elapses after the restart (S30) of outputting the AC output power after a lapse of the fourth waiting period (S33: YES), the control circuit 35 interrupts outputting the AC output power (S21) and interrupts inputting the input power (S22).

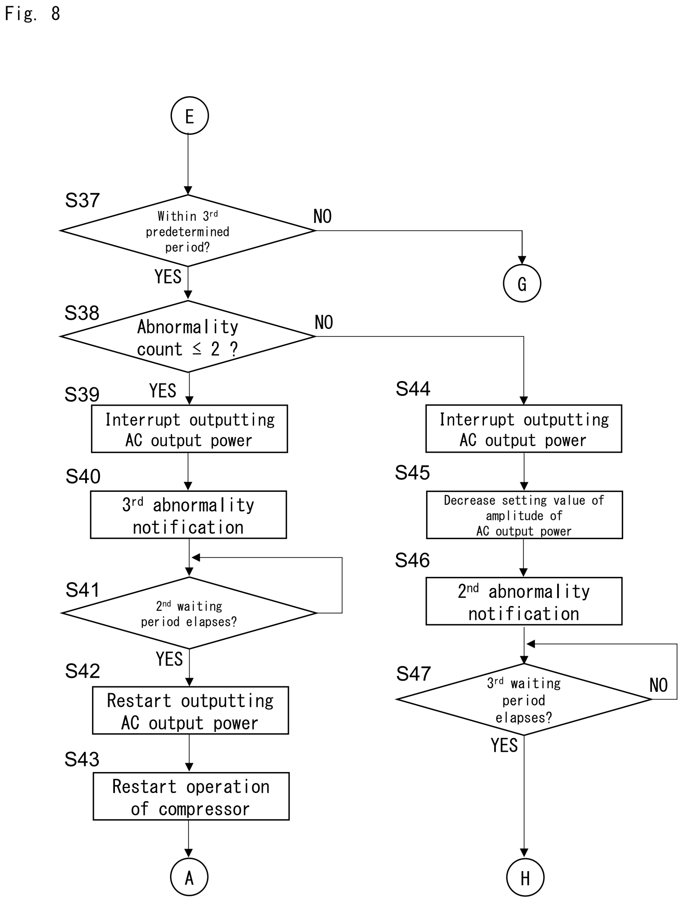

Returning to Fig. 6, if in step S25 the time difference is not within the second predetermined period (S25: NO), referring to Fig. 8, the control circuit 35 determines whether the time difference is within a third predetermined period, which is longer than the second predetermined period (step S37). The third predetermined period is, for example, about 10,000 times the period corresponding to the reference frequency of the inverter circuit 312, that is, about 2 to 10 s.

If in step S37 the time difference is not within the third predetermined period (S37: NO), the process returns to step S10, and the control circuit 35 sets the abnormality count to zero (see Fig. 4). That is, if sufficient time has passed since the last abnormality detection, it is considered that the possibility of occurrence of a discharge phenomenon is low, and the abnormality count is reset to zero.

If in step S37 the time difference is within the third predetermined period (S37: YES), the control circuit 35 determines whether the abnormality count is two or less (S38).

If in step S38 the abnormality count is two or less (S38: YES), the control circuit 35 sets the first protective device 33 to the OFF state to interrupt outputting the AC output power (S39). The control circuit 35 outputs a third abnormality notification (S40). The third abnormality notification indicates that an abnormality that may cause a disproportionation reaction has occurred in the refrigeration cycle device 1. The third abnormality notification is output, for example, to the control circuit of the indoor unit 1b and to a remote controller. The control circuit 35 determines whether a second waiting period has elapsed after the interruption of outputting the AC output power (S41). The second waiting period is longer than the first waiting period and is, for example, 10 seconds. When the second waiting period has elapsed (S41: YES), the control circuit 35 sets the first protective device 33 to the ON state to restart outputting the AC output power (S42), thereby restarting the operation of the compressor 4 (S43). Thereafter, the process returns to step S11.

In this way, if the detection voltage falls below the second voltage before a predetermined period (the third predetermined period) elapses after the restart of outputting the AC output power after a lapse of the first waiting period (S18), the control circuit 35 switches from the first route R1 to the second route R2 by the switching device 36 to reduce the internal pressure of the compressor to the predetermined pressure or less. Further, the control circuit 35 interrupts outputting the AC output power. If the second waiting period, which is longer than the first waiting period, has elapsed after the interruption of outputting the AC output power, the control circuit 35 restarts outputting the AC output power (S42).

In step S38, if the abnormality count is not two or less (S38: NO), that is, if the abnormality count is three or more, the control circuit 35 sets the first protective device 33 to the OFF state to interrupt outputting the AC output power (S44). The control circuit 35 changes the switching control of the semiconductor switching elements of the drive circuit 31 so that the setting value of the amplitude of the AC output power is reduced from E to E/2 (S45). The control circuit 35 outputs the second abnormality notification (S46).

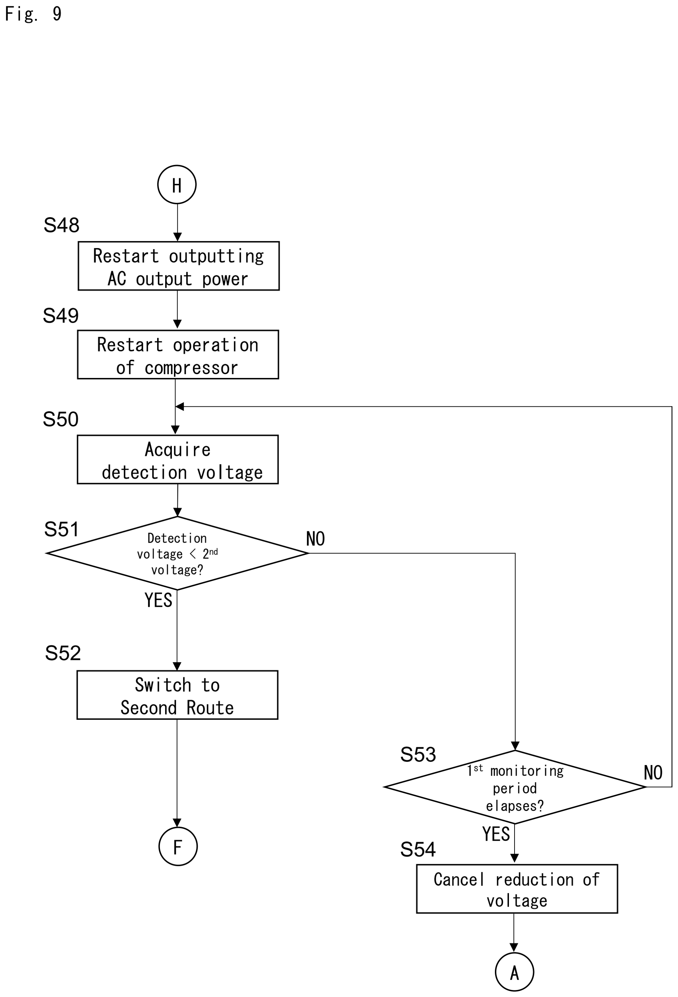

The control circuit 35 determines whether third waiting period has elapsed after the interruption of outputting the AC output power (S47). The third waiting period is longer than the second waiting period and is, for example, 60 seconds. When the third waiting period has elapsed (S47: YES), as shown in Fig. 9, the control circuit 35 sets the first protective device 33 to the ON state to restart outputting the AC output power (S48) and switches from the second route R2 to the first route R1 by the switching device 36, thereby restarting the operation of the compressor 4 (S49). In this case, the setting value of the amplitude of the AC output power remains reduced from E to E/2.

Thus, if the detection voltage falls below the second voltage before a predetermined period (the third predetermined period) elapses after the restart of outputting the AC output power after a lapse of the second waiting period (S42), the control circuit 35 switches from the first route R1 to the second route R2 by the switching device 36 to reduce the internal pressure of the compressor to the predetermined pressure or less. Further, the control circuit 35 interrupts outputting the AC output power (S44) and reduces the setting value of the amplitude of the AC output power (S45). If the third waiting period, which is longer than the second waiting period, has elapsed after the interruption of outputting the AC output power, the control circuit 35 restarts outputting the AC output power while keeping the setting value of the amplitude reduced (S48).

Thereafter, the control circuit 35 acquires the detection voltage from the state detection circuit 32 (S50) and determines whether the detection voltage falls below the second voltage (S51).

If in step S51 the detection voltage falls below the second voltage (S51: YES), the control circuit 35 switches from the first route R1 to the second route R2 by the switching device 36 (S52), and the process proceeds to step S21 in Fig. 5.

If in step S51 the detection voltage does not fall below the second voltage (S51: NO), the control circuit 35 determines whether a first monitoring period has elapsed since restart of the operation of the compressor 4 (S53). The first monitoring period may be the same as or different from the second monitoring period in step S35.

If in step S53 the first monitoring period has elapsed since restart of the operation of the compressor 4 (S53: YES), the control circuit 35 cancels the reduction of the setting value of the amplitude of the AC output power and returns the setting value of the amplitude to E (S54), and then the process proceeds to step S11 in Fig. 4.

If in step S53 the first monitoring period has not elapsed since restart of the operation of the compressor 4 (S53: NO), the process returns to step S50.

In steps S50 to S53, if the detection voltage falls below the second voltage before the first monitoring period has elapsed since restart of the operation of the compressor 4, the process proceeds to step S21 in Fig. 5, and if the detection voltage does not fall below the second voltage before the end of the first monitoring period, the process proceeds to step S54.

In this way, if the detection voltage does not fall below the second voltage during the first monitoring period after the restart (S48) of the AC output power after a lapse of the third waiting period (S53: YES), the control circuit 35 cancels the reduction of the setting value of the amplitude of the AC output power (S54). If the detection voltage falls below the second voltage before the first monitoring period elapses after the restart (S48) of outputting the AC output power after a lapse of the third waiting period (S51: YES), the control circuit 35 switches from the first route R1 to the second route R2 by the switching device 36 to reduce the internal pressure of the compressor to the predetermined pressure or less. Further, the control circuit 35 interrupts outputting the AC output power (S21) and interrupts inputting the input power (S22).

### [1.1.2 ADVANTAGEOUS EFFECTS]

The aforementioned control device 3 is configured to control the refrigeration cycle circuit 2 which includes the compressor 4, the condenser (the first heat exchanger 5, the second heat exchanger 7), the expansion valve 6, and the evaporator (the first heat exchanger 5, the second heat exchanger 7) and allows circulation of the working medium 20. The control device 3 includes: the drive circuit 31 configured to drive the compressor 4; the state detection circuit 32 configured to detect a state of at least one of the compressor 4 or the drive circuit 31; the switching device 36 configured to switch between the first route R1 connecting the discharge pipe 402 of the compressor 4 to the condenser (the first heat exchanger 5, the second heat exchanger 7) and the second route R2 connecting the discharge pipe 402 of the compressor 4 to the predetermined space decreasing the internal pressure of the compressor 4 to be the predetermined pressure or less; and the control circuit 35 configured to control the drive circuit 31 and the switching device 36. The control circuit 35 is configured to switch from the first route R1 to the second route by the switching device 36 when the state of at least one of the compressor 4 or the drive circuit 31 detected by the state detection circuit 32 indicates a non-steady state of the refrigeration cycle circuit 2 (i.e., in response to detection of abnormality in at least one of the compressor 4 or the drive circuit 31). This configuration enables improvement of suppression of the disproportionation reaction of the working medium 20.

In the control device 3, the predetermined space has a pressure of 0.4 MPa or less. When the predetermined space has a pressure of 0.4 MPa or less, the compressor 4 has its internal pressure of 2.0 MPa or less. This configuration enables improvement of suppression of the disproportionation reaction of the working medium 20.

In the control device 3, the predetermined pressure is 3.0 MPa or less. This configuration enables improvement of suppression of the disproportionation reaction of the working medium 20.

In the control device 3, the switching device 36 is positioned between the discharge pipe 402 of the compressor 4 and the condenser. The first route R1 connects the discharge pipe 402 of the compressor 4 to the condenser. The second route R2 connects the discharge pipe 402 of the compressor 4 to the predetermined space. This configuration enables improvement of suppression of the disproportionation reaction of the working medium 20.

In the control device 3, the refrigeration cycle circuit 2 includes the accumulator 9 positioned closer to the suction pipe 401 of the compressor 4. The second route R2 connects the discharge pipe 402 of the compressor 4 to the internal space of the accumulator 9. This configuration enables improvement of suppression of the disproportionation reaction of the working medium 20. Further, the working medium 20 is not discharged outside from the refrigeration cycle circuit 2. Therefore, it is possible to return to the normal operation (the cooling operation, the heating operation) of the refrigeration cycle circuit 2 by switching from the second route R2 to the first route R1.

In the control device 3, the control circuit 3 is configured to interrupt or limit the operation of the drive circuit 31 when the state of at least one of the compressor 4 or the drive circuit 31 detected by the state detection circuit 32 indicates the non-steady state (i.e., in response to detection of abnormality in at least one of the compressor 4 or the drive circuit 31). This configuration enables improvement of suppression of the disproportionation reaction of the working medium 20.

In the control device 3, the drive circuit 31 includes the converter circuit 311 configured to output DC output power so that the voltage of the DC output power is equal to the first voltage, based on input power from the power supply 10, and the inverter circuit 312 configured to output AC output power to the compressor 4, based on the DC output power. The state detection circuit 32 is configured to detect the DC output power to output the detection voltage indicative of the voltage of the DC output power. The non-steady state (i.e., the abnormality in at least one of the compressor 4 or the drive circuit 31) includes the state where the detection voltage is lower than the second voltage equal to or lower than the first voltage. This configuration enables earlier detection of a sign of the disproportionation reaction of the working medium 20 and improves the suppression of the disproportionation reaction of the working medium 20.

In the control device 3, the second voltage is between 0.3 and 0.8 times the first voltage, inclusive. This configuration enables improvement of suppression of the disproportionation reaction of the working medium 20.

The aforementioned refrigeration cycle device 1 includes the control device 3 and the refrigeration cycle circuit 2. This configuration enables improvement of suppression of the disproportionation reaction of the working medium 20.

In the refrigeration cycle device 1, the working medium 20 contains ethylene-based fluoroolefin. This configuration enables improvement of suppression of the disproportionation reaction of the working medium 20.

In the refrigeration cycle device 1, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This configuration enables improvement of suppression of the disproportionation reaction of the working medium 20.

In the refrigeration cycle device 1, the working medium 20 further contains difluoromethane. This configuration enables improvement of suppression of the disproportionation reaction of the working medium 20.

In the refrigeration cycle device 1, the working medium 20 further contains a saturated hydrocarbon. This configuration enables improvement of suppression of the disproportionation reaction of the working medium 20.

In the refrigeration cycle device 1, the working medium 20 contains a haloalkane with 1 or 2 carbon atoms as a disproportionation inhibitor for suppressing a disproportionation reaction of the ethylene-based fluoroolefin. This configuration enables improvement of suppression of the disproportionation reaction of the working medium 20. In particular, in a disproportionation reaction triggered by discharge, there is an induction period between the occurrence of the discharge and the rapid propagation of the reaction, and the disproportionation inhibitor can extend this induction period. Accordingly, the possibility that the disproportionation reaction will proceed before the control circuit 35 lowers the internal pressure of the compressor 4 can be reduced. As a result, through both the reduction in the internal pressure of the compressor 4 and the prolongation of the induction period, the disproportionation reaction of the working medium 20 can be suppressed more effectively.

In the refrigeration cycle device 1, the saturated hydrocarbon contains n-propane. This configuration enables improvement of suppression of the disproportionation reaction of the working medium 20.

The aforementioned control device 3 is considered to perform the following control method. The control method is performed by the control device 3 for controlling the refrigeration cycle circuit 2 which includes the compressor 4, the condenser (the first heat exchanger 5, the second heat exchanger 7), the expansion valve 6, and the evaporator (the first heat exchanger 5, the second heat exchanger 7) and allows circulation of the working medium 20. The control device 3 includes the drive circuit 31 configured to drive the compressor 4, and the control circuit 35 configured to control the drive circuit 31. The control method includes connecting the discharge pipe 402 of the compressor 4 to the predetermined space to decrease the internal pressure of the compressor 4 to the predetermined pressure or less, when the state of at least one of the compressor 4 or the drive circuit 31 indicates the non-steady state of the refrigeration cycle circuit 2 (i.e., in response to detection of abnormality in at least one of the compressor 4 or the drive circuit 31). This configuration enables improvement of suppression of the disproportionation reaction of the working medium 20.

The control method performed by the control device 3 is realized by a computer system executing a computer program. This program is executed by a computer system included in the control device 3 for controlling the refrigeration cycle circuit 2 which includes the compressor 4, the condenser (the first heat exchanger 5, the second heat exchanger 7), the expansion valve 6, and the evaporator (the first heat exchanger 5, the second heat exchanger 7) and allows circulation of the working medium 20. The control device 3 includes the drive circuit 31 configured to drive the compressor 4, and the control circuit 35 configured to control the drive circuit 31. The program allows the computer system to connect the discharge pipe 402 of the compressor 4 to the predetermined space to decrease the internal pressure of the compressor 4 to the predetermined pressure or less, when the state of at least one of the compressor 4 or the drive circuit 31 indicates the non-steady state of the refrigeration cycle circuit 2 (i.e., in response to detection of abnormality in at least one of the compressor 4 or the drive circuit 31). This configuration enables improvement of suppression of the disproportionation reaction of the working medium 20.

### [1.2. EMBODIMENT 2]

### [1.2.1 CONFIGURATIONS]

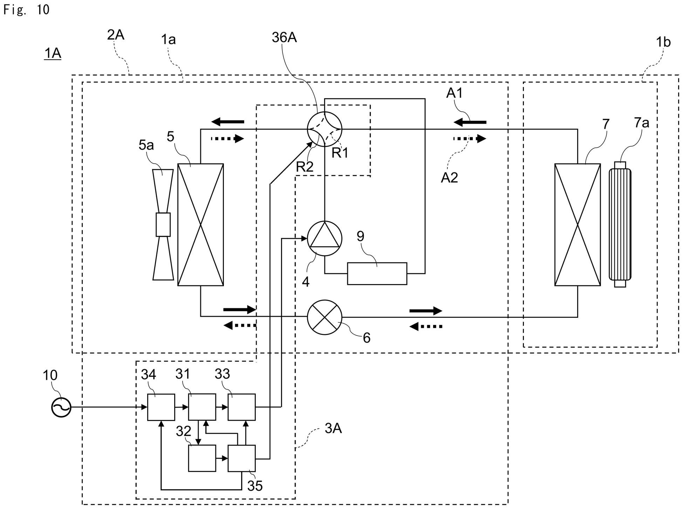

Fig. 10 is a block diagram of a refrigeration cycle device 1A according to the present embodiment. The refrigeration cycle device 1A includes a refrigeration cycle circuit 2A and a control device 3A.

The control device 3A includes the drive circuit 31, the state detection circuit 32, the first protective device 33, the second protective device 34, the control circuit 35, and a switching device 36A.

The switching device 36A is a four-way valve configured to switch a direction in which the working medium 20 circulates through the refrigeration cycle circuit 2A between a first direction A1 corresponding to cooling operation and a second direction A2 corresponding to the heating operation. The first route R1 corresponds to the second direction and connects the discharge pipe 402 of the compressor 4 to the second heat exchanger 7. The second route R2 corresponds to the first direction and connects the discharge pipe 402 of the compressor 4 to the first heat exchanger 5. The first heat exchanger 5 functions as a condenser during the cooling operation, but functions as an evaporator during the heating operation. In the refrigeration cycle circuit 2A, the internal pressure of the evaporator is lower than the internal pressure of the condenser. The internal space of the first heat exchanger 5, which functions as the evaporator during the heating operation, constitutes the predetermined space. Therefore, the predetermined space is located inside the refrigeration cycle circuit 2A.

In Embodiment 2, the four-way valve 8 of the refrigeration cycle device 1 in Embodiment 1 is used as the switching device 36A. Accordingly, in Embodiment 2, there is no need to add components to the refrigeration cycle circuit 2A, and the refrigeration cycle circuit 2A itself need not be modified from the existing structure. This enables cost reduction.

In the present embodiment, when the detection voltage falls below the second voltage equal to or lower than the first voltage, the control circuit 35 switches, by means of the switching device 36A, from the first route R1 to the second route R2 and increases a degree of opening the expansion valve 6. When switching from the first route R1 to the second route R2, the discharge pipe 402 of the compressor 4 is connected from the second heat exchanger 7, which functions as the condenser during the heating operation, to the first heat exchanger 5, which functions as the evaporator during the heating operation. Since the internal pressure of the evaporator is lower than the internal pressure of the condenser, the internal pressure of the compressor 4 is reduced to the predetermined pressure or lower. By increasing the degree of opening of the expansion valve 6, the flow of the working medium 20 from the first heat exchanger 5 to the second heat exchanger 7 is promoted, thereby efficiently reducing the internal pressure of the compressor 4.

### [1.2.2 ADVANTAGEOUS EFFECTS]

In the aforementioned control device 3A, the refrigeration cycle circuit 2A includes the first heat exchanger 5 and the second heat exchanger 7. The switching device 36A is a four-way valve configured to switch a direction in which the working medium 20 circulates through the refrigeration cycle circuit 2A between the first direction corresponding to the cooling operation and the second direction corresponding to the heating operation. The first route R1 corresponds to the second direction and connects the discharge pipe 402 of the compressor 4 to the second heat exchanger 7. The second route R2 corresponds to the first direction and connects the discharge pipe 402 of the compressor 4 to the first heat exchanger 5. The control circuit 35 is configured to switch from the first route R1 to the second route R2 by the switching device 36 and increase the degree of opening of the expansion value 6 when the state of at least one of the compressor 4 or the drive circuit 31 detected by the state detection circuit 32 indicates the non-steady state. This configuration enables improvement of suppression of the disproportionation reaction of the working medium 20. Further, the refrigeration cycle circuit 2A itself need not be modified from the existing structure. This enables cost reduction. Since the working medium 20 is not released from the refrigeration cycle circuit 2A to the outside, switching from the second route R2 to the first route R1 makes it possible to return to the normal operation (the cooling operation, the heating operation) of the refrigeration cycle circuit 2A.

### [1.3. EMBODIMENT 3]

### [1.3.1 CONFIGURATIONS]

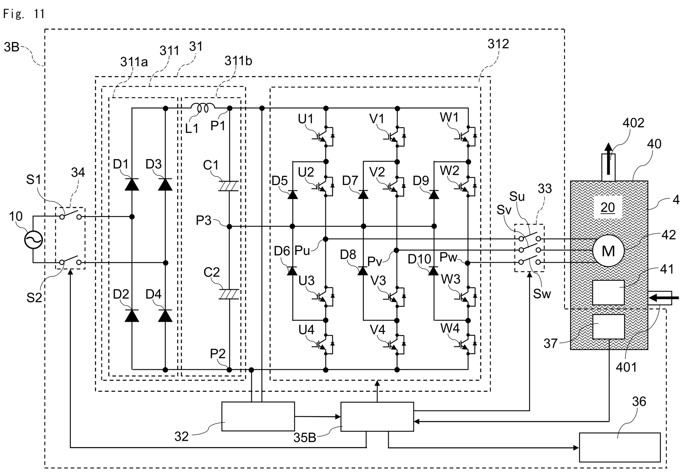

Fig. 11 shows a control device 3B according to Embodiment 3. The control device 3B includes the drive circuit 31, the state detection circuit 32, the first protective device 33, the second protective device 34, a control circuit 35B, the switching device 36, and a measurement circuit 37.

The measurement circuit 37 is provided to measure an internal state of the refrigeration cycle circuit 2. The internal state of the refrigeration cycle circuit 2 may include at least one of a pressure, a temperature, or a product amount inside the refrigeration cycle circuit 2. Thus, the measurement circuit 37 is configured to detect at least one of the pressure, the temperature, or the product amount inside the refrigeration cycle circuit 2.

The pressure inside the refrigeration cycle circuit 2 may be, for example, the internal pressure of the compressor 4. The internal pressure of the compressor 4 may be acquired, for example, by a pressure sensor disposed inside a refrigerant pipe in the vicinity of the discharge pipe 402 of the compressor 4 or inside the tightly sealed vessel 40 of the compressor 4.

The temperature inside the refrigeration cycle circuit 2 may be, for example, the internal temperature of the compressor 4. The internal temperature of the compressor 4 may be acquired, for example, by a temperature sensor disposed inside a refrigerant pipe in the vicinity of the discharge pipe 402 of the compressor 4 or inside the tightly sealed vessel 40 of the compressor 4.

The product amount may be an amount of a product generated from the working medium 20 by the disproportionation reaction of the working medium 20. These types of product may include intermediate products and/or final products. The final products refer to chemical species, among those generated in the disproportionation of the working medium 20, that are thermodynamically stable. Here, "thermodynamically stable" refers to compounds whose type and composition do not change when exposed to high temperatures of 2000 K or more for a predetermined period (e.g., about 10 minutes) at 1 atm, and then returned to room temperature and atmospheric pressure. The intermediate products are chemical species, generated in the disproportionation of the working medium 20, that are thermodynamically unstable. "Thermodynamically unstable" means that at least one of the type or composition of the compounds change when exposed to 2000 K or more at 1 atm. Thermodynamically unstable species include so-called metastable species. In particular, the intermediate products are species that can exist with a lifetime of 1 ms or more, but can decompose at high temperatures (e.g., 2000 K or higher) to produce the final products. Naturally, the final products are not included in the intermediate products. Note that the lifetime herein refers to the measured lifetime under conditions corresponding to the inside of the refrigeration cycle circuit 2. One example of lifetime measurement is under a maximum temperature of 500 K and a maximum pressure of 6 MPa.

For example, when the working medium 20 includes an ethylene-based fluoroolefin as a refrigerant component, examples of the intermediate product includes carbene, carbene insertion products (compounds formed by carbene insertion reaction), tetrafluoroethylene, perfluoroolefins, and fluorobenzene. Examples of the final product includes soot, hydrogen fluoride, and tetrafluoromethane.

Various measures can be used to measure the product amount.

As a first example, the product amount can be measured by use of changes in the transmittance of the working medium 20. Especially, this is effective for a case where the product circulates through the refrigeration cycle circuit 2 together with the working medium 20 as an insoluble component. For example, when the working medium contains ethylene-based fluoroolefin, soot or hydrogen fluoride (HF) may be generated as an insoluble component. When the discharge phenomenon is repeated, the amount of the insoluble component such as soot increases. Such an increase in the insoluble component may lead to a decrease in the transmittance of the working medium 20.

In this case, the measurement circuit 37 may include a light detection circuit using transmittance. The light detection circuit using transmittance may include a light source device and a light detection device, for example. The light source device is configured to emit light to the inside of the refrigeration cycle circuit 2. The light is directional light (for example, laser light, or collimated parallel light generated by converging light emitted from a light-emitting diode (LED) using a lens or double slit). The color of the light is not particularly limited and may be white light or red light having a wavelength of 650 nm to 690 nm. The light detection device receives the light and outputs the intensity of the received light. The light detection device outputs a light detection signal indicating the intensity of the light to the control circuit 35B.

The location in the refrigeration cycle circuit 2 where the light source device irradiates the working medium 20 with light is not particularly limited; however, the light source device irradiates the working medium 20 in the compressor 4 with light. Since the discharge phenomenon described above may occur in the electric motor 42 of the compressor 4, it is considered that a decrease in transmittance due to insoluble components such as soot can be readily detected in the working medium 20 inside the compressor 4. The light detection circuit may be located inside the tightly sealed vessel 40 of the compressor 4. The light source device may irradiate the working medium 20 in the region between the electric motor 42 and the suction pipe 401 with light. The working medium 20 may contain bubbles. Bubbles in the working medium 20 scatter light and may cause a decrease in transmittance, thereby adversely affecting evaluation using transmittance. Here, the region between the electric motor 42 and the suction pipe 401 is considered to have a small amount of bubbles. Therefore, it is possible to suppress a decrease in accuracy due to bubbles.

As a second example, the product amount can be measured by use of a fluorescent dye. When a discharge phenomenon occurs, products generated by chemical reactions of the working medium 20 may circulate within the refrigeration cycle circuit 2 together with the working medium 20. For example, when the working medium contains ethylene-based fluoroolefins, hydrogen fluoride (HF) is one example of a product (hereinafter also referred to as product (A)) generated by a chemical reaction of the working medium 20. Such a product (A) is an example of a product generated from the working medium 20 by a disproportionation reaction. When discharge phenomena are repeatedly generated, the amount of the product (A) increases. The increase of the product (A) can also become a cause of an abnormality in the refrigeration cycle circuit 2. The present inventors have found that a fluorescent dye can be used for quantitative evaluation of the product (A). That is, if the fluorescent dye has a property of reacting with the product (A) such that at least one of the fluorescence wavelength or the quantum yield changes, the increase of the product (A) can be observed as a change in the intensity of light having a wavelength corresponding to the fluorescence wavelength of the fluorescent dye. By focusing on the intensity of light having a wavelength corresponding to the fluorescence wavelength of the fluorescent dye, the product (A) can be quantitatively evaluated.

In this case, the measurement circuit 37 may include a light detection circuit using a phosphor.

The phosphor contains a fluorescent dye and is located inside the refrigeration cycle circuit 2 to be contactable with the working medium 20. For example, the phosphor is a refrigerating machine oil in which the fluorescent dye is dissolved. That is, the phosphor may be constituted by dissolving the fluorescent dye into the refrigerating machine oil of the compressor 4. The phosphor circulates through the refrigeration cycle circuit 2 together with the working medium 20. Therefore, the probability that the fluorescent dye of the phosphor comes into contact with and reacts with the product (A) can be increased.

The fluorescent dye has a property of reacting with the product (A) generated by chemical reactions of the working medium 20, such that at least one of a fluorescence wavelength or a quantum yield changes. Therefore, depending on the type of fluorescent dye, the reaction between the fluorescent dye and the product (A) may cause either an increase or a decrease in the quantity of light at the fluorescence wavelength.

Examples of the fluorescent dye are described below. The following examples of the fluorescent dye are particularly preferable in cases where the product (A) is a substance (for example, hydrogen fluoride) that generates fluoride ions.

The fluorescent dye may be a triarylfluorosilane compound. The triarylfluorosilane compound is, for example, represented by SiFR¹R²R³ (see Formula (1)). R¹, R², and R³ are each anthracene or a derivative thereof, or R¹ and R² are anthracene or derivatives thereof and R³ is benzene or a derivative thereof.

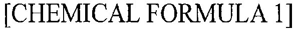

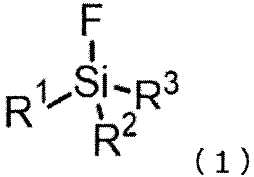

The fluorescent dye may be a compound having a structure in which a donor group and an acceptor group are bonded. The donor group has a donor property in an excited state. The donor group is a chromophore. The acceptor group has a high acceptor property in a free state and has a low acceptor property in a state in which it is bound to the product (A) or ions derived from the product (A). The acceptor group is an acceptor.

The acceptor group may be selected from the group consisting of: a compound (hereinafter referred to as compound (B)) having a structure in which two or more amino groups are bonded to each other via one or two methylene groups; a compound (hereinafter referred to as compound (C)) having a structure in which two or more pyrrole groups or indole groups are bonded to each other via two methylene groups; benzamide; bis(methylidene)hydrazine; and calixarene.

Examples of compound (B) include urea and derivatives thereof, thiourea and derivatives thereof, and polyamine macrocycles.

Examples of compound (C) include 1,2-ethandiyl-bis(pyrrole) and 1,2-ethandiyl-bis(indole).

The donor group may be selected from the group consisting of anthracene, naphthalimide, pyrene, BODIPY, fluorescein, rhodamine, resorufin, coumarin, and cyanine.

For example, some of the above-mentioned fluorescent dyes undergo a change in a fluorescence wavelength as a result of reaction with the product (A). As one example, in the case of a triarylfluorosilane compound, the fluorescence wavelength for an excitation wavelength of 366 nm changes from 416 nm to 396 nm. Accordingly, the presence of the product (A) can be detected by a decrease in the intensity of the light at the fluorescence wavelength of 416 nm or an increase in the intensity of the light at the fluorescence wavelength of 396 nm.

The light detection circuit using a phosphor may include a light source device and a light detection device. The light source device is configured to emit excitation light with a wavelength corresponding to an excitation wavelength of the fluorescent dye to the inside of the refrigeration cycle circuit 2. The excitation light may be directional light (for example, laser light). A wavelength range of the excitation light only needs to include the excitation wavelength of the fluorescent dye. However, it is preferable that the wavelength range of the excitation light does not include the fluorescence wavelength of the fluorescent dye. The light source device may be, for example, a laser diode. The light detection device is configured to receive light with a wavelength corresponding to the fluorescence wavelength of the fluorescent dye to output an intensity of the received light. The light detection device outputs a light detection signal indicating an intensity of the light to the control circuit 35B. A wavelength range in which the light detection device is sensitive only needs to include the fluorescence wavelength of the fluorescent dye. However, when the fluorescence wavelength of the fluorescent dye changes, it is preferable that the wavelength range in which the light detection device is sensitive includes only one of the fluorescence wavelength before the change and the fluorescence wavelength after the change. Furthermore, it is preferable that the wavelength range in which the light detection device is sensitive does not include the excitation wavelength of the fluorescent dye. The light detection device includes, for example, a photodiode and an optical system (such as a lens).

The light source device emits the excitation light to a portion between the discharge pipe 402 of the compressor 4 and the condenser (the first heat exchanger 5 during the cooling operation and the second heat exchanger 7 during the heating operation), of the refrigeration cycle circuit 2. Particularly, the light source device emits the excitation light to a portion between the discharge pipe 402 of the compressor 4 and the four-way valve 8. The light source device emits the excitation light to a portion which is closer to the discharge pipe 402 of the compressor 4 than the four-way valve 8. In this way, the possibility of the excitation light striking the fluorescent element is increased.

The light detection device receives the light from the portion between the discharge pipe 402 of the compressor 4 and the condenser (the first heat exchanger 5 during the cooling operation and the second heat exchanger 7 during the heating operation), of the refrigeration cycle circuit 2. Particularly, the light detection device receives the light from the portion between the discharge pipe 402 of the compressor 4 and the four-way valve 8. The light detection device receives the light from the portion closer to the discharge pipe 402 of the compressor 4 than the four-way valve 8. In this way, the intensity of the light received by the light detection device can be increased.

Note that, the phosphor is not limited to a refrigerating machine oil in which the fluorescent dye is dissolved. The phosphor may be a support carrying a fluorescent dye. The support is, for example, a porous material. The porous material may be either inorganic or organic porous material. Examples of inorganic porous material include mesoporous silica. Examples of organic porous material include synthetic resin membranes or paper. Since the porous material can secure a larger surface area, it is possible to increase the likelihood that the fluorescent dye comes into contact with the working medium 20. This phosphor may be fixed at a predetermined location of the refrigeration cycle circuit 2. For example, the phosphor may be located in the tightly sealed vessel 40 of the compressor 4, and be located in a region between the electric motor 42 and the discharge pipe 402. In the phosphor including the support, unlike the phosphor including the refrigerating machine oil, the fluorescent dye is present at a predetermined position without being dispersed throughout the refrigeration cycle circuit 2, so although the possibility of contact with the working medium 20 decreases, the fluorescent dye can be reliably irradiated with the excitation light.

As a third example, the product amount can be measured by utilizing a dye. When a discharge phenomenon occurs, products generated by chemical reactions of the working medium 20 may circulate within the refrigeration cycle circuit 2 together with the working medium 20. For example, when the working medium contains ethylene-based fluoroolefin, a product generated by a chemical reaction of the working medium 20 (hereinafter referred to as product (D)) include tetrafluoroethylene (C₂F₄) or hydrogen fluoride (HF). Such a product (D) is an example of a product generated from the working medium 20 by a disproportionation reaction. When discharge phenomena are repeatedly generated, the amount of the product (D) increases, and an increase in the amount of the product (D) can also become a cause of an abnormality in the refrigeration cycle circuit 2. A dye can be used for the quantitative evaluation of the product (D). That is, if the dye has a property of reacting with the product (D) such that its absorption maximum wavelength changes, the increase of the product (D) can be observed as a change in the intensity of the light having a wavelength band including the absorption wavelength of the dye. Note that, it is desirable that the difference between the absorption maximum wavelength of the dye and the absorption maximum wavelength of the dye after reaction with the product (D) be large enough to clearly distinguish between the waveform of the wavelength change of the absorbance of the dye and the waveform of the wavelength change of the absorbance after reaction with the product (D).

By focusing on an intensity of light in a wavelength band including the absorption wavelength of the dye, the product (D) can be quantitatively evaluated.

In this case, the measurement circuit 37 may include a light detection circuit using a light absorber.

The light absorber contains a dye and is located inside the refrigeration cycle circuit 2 to be contactable with the working medium 20. For example, the light absorber is a refrigerating machine oil in which the dye is dissolved. That is, the light absorber is constituted by dissolving the dye into the refrigerating machine oil of the compressor 4. The light absorber circulates through the refrigeration cycle circuit 2 together with the working medium 20. Therefore, the probability that the dye of the light absorber comes into contact with and reacts with the product (D) can be increased.

The dye has a property of reacting with the product (D) generated by a chemical reaction of the working medium 20 such that its absorption maximum wavelength changes. Therefore, depending on the type of dye, the reaction between the dye and the product (D) may either increase or decrease the amount of light at the absorption wavelength.

The following is a first example of the dye. The first example of the dye is preferable in cases where the product (D) is tetrafluoroethylene. The first example of the dye may include a nickel complex. The nickel complex can react with tetrafluoroethylene to cause a change in absorbance. Thus, the presence of tetrafluoroethylene as the product (D) can be detected by the change in the intensity of the light at the wavelength where absorbance changes. Examples of the nickel complex include bis(triphenylphosphine)nickel(0) (see Chemical formula (2)); bis(ortho-diphenylphosphanylphenyl)ether nickel(0) (see Chemical formula (3)); 2,2'-bis(ortho-diphenylphosphino)trans-stilbene nickel(0) (see Chemical formula (4)); 2,2'-bis(diphenylphosphino)biphenyl nickel(0) (see Chemical formula (5)); 2,2'-bis(diphenylphosphino)diphenylmethane nickel(0) (see Chemical formula (6)); and 2,2'-bis(diphenylphosphino)diphenylpropane nickel(0) (see Chemical formula (7)).

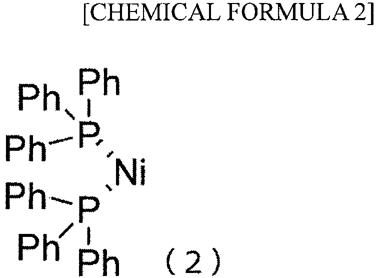

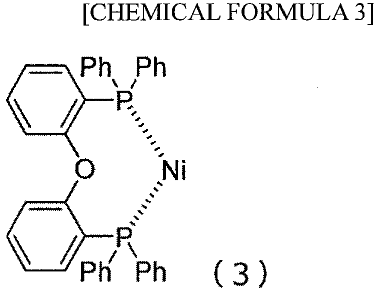

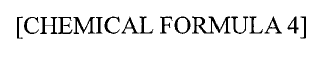

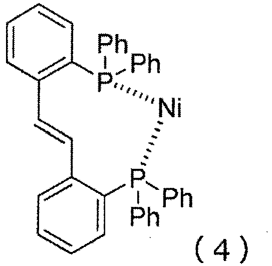

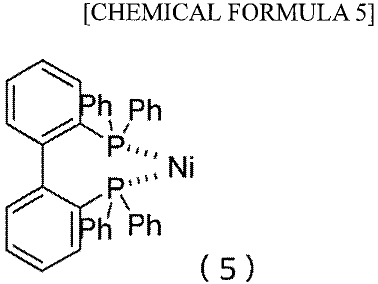

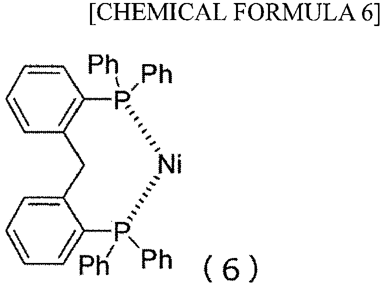

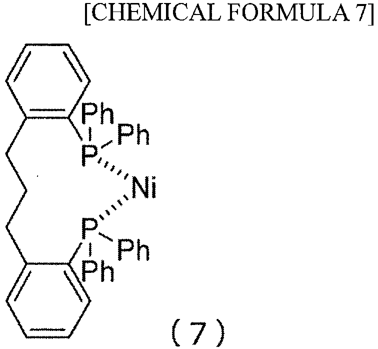

The following is a second example of the dye. The second example of the dye is preferable in cases where the product (D) is hydrogen fluoride. The second example of the dye may include a boron compound having an aromatic substituent. The boron compound having an aromatic substituent can react with hydrogen fluoride and cause a change in absorbance. Thus, the presence of hydrogen fluoride as the product (D) can be detected by monitoring the change in intensity of light at the wavelength where the absorbance changes. An example of a boron compound having an aromatic substituent is diarylnaphthylborane represented by Chemical formula (8). R¹ and R² are each selected from the group consisting of a naphthyl group represented by Chemical formula (9) or a mesityl group represented by Chemical formula (10).

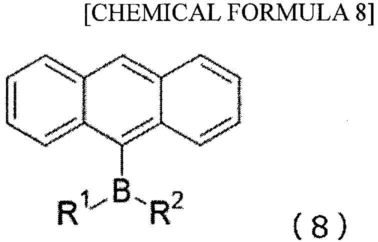

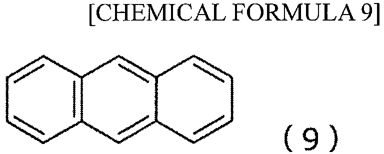

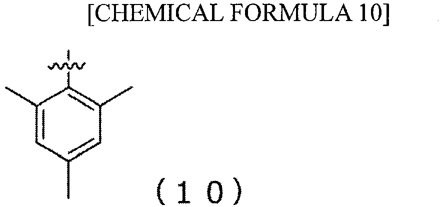

The light detection circuit using the light absorber includes a light source device and a light detection device. The light source device is configured to emit light with a wavelength band including the absorption wavelength of the dye, to the inside of the refrigeration cycle circuit 2. For example, the light source device may include a first light source and a second light source. The first light source and the second light source can emit first light and second light which have different wavelength bands, to the inside of the refrigeration cycle circuit 2. This means that the first light and the second light correspond to different absorption wavelengths of the dye. Thus, the light source device may emit a plurality of rays of light with different wavelength bands. For example, the first light and the second light are directional light (such as laser light). The first light source and the second light source are, for example, laser diodes. The light detection device is configured to receive the first light and the second light from the light source device to output the intensities of the received first light and second light. The light detection device may output light detection signals indicating the intensities of the received first light and second light to the control circuit 35B. By using the intensities of the plurality of rays of light having different wavelength bands, the influence of colors of substances other than the dye in the light absorber, for example, the influence of color tone changes in the refrigerating machine oil, can be reduced. The light detection device may include a first light detector and a second light detector. The first light detector may be placed to receive the first light emitted from the first light source and the second light detector may be placed to receive the second light emitted from the second light source. Each of the first light detector and the second light detector may include a light detection element and an optical system. The light detection element includes, for example, a photodiode. The optical system includes, for example, a lens (such as a focusing lens).

The light source device may emit the first light and the second light to a portion between the discharge pipe 402 of the compressor 4 and the condenser (the first heat exchanger 5 during the cooling operation and the second heat exchanger 7 during the heating operation), of the refrigeration cycle circuit 2. Particularly, the light source device emits first light and second light to a portion between the discharge pipe 402 of the compressor 4 and the four-way valve 8. The light source device emits the first light and the second light to a portion which is closer to the discharge pipe 402 of the compressor 4 than the four-way valve 8. In this way, the possibility of the first light and the second light striking the dye is increased.

The light detection device receives the first light and the second light from the portion between the discharge pipe 402 of the compressor 4 and the condenser (the first heat exchanger 5 during the cooling operation and the second heat exchanger 7 during the heating operation), of the refrigeration cycle circuit 2. Particularly, the light detection device may receive the first light and the second light from the portion between the discharge pipe 402 of the compressor 4 and the four-way valve 8. The light detection device receives the first light and the second light from the portion closer to the discharge pipe 402 of the compressor 4 than the four-way valve 8. In this way, the intensity of the first light and the second light received by the light detection device can be increased.

Note that, the light absorber is not limited to a refrigerating machine oil in which the dye is dissolved. The light absorber may be a support carrying a dye. The support is, for example, a porous material. The porous material may be either inorganic or organic porous material. Examples of inorganic porous material include mesoporous silica. Examples of organic porous material include synthetic resin membranes or paper. Since the porous material can secure a larger surface area, it is possible to increase the likelihood that the dye comes into contact with the working medium 20. It is preferable that the porous material has a property of transmitting light without blocking it. The light absorber is fixed at a predetermined location of the refrigeration cycle circuit 2. The light absorber may be located in the tightly sealed vessel 40 of the compressor 4. For example, the light absorber is located in a region between the electric motor 42 and the discharge pipe 402. In the light absorber including the support, unlike the light absorber including the refrigerating machine oil, the dye is present at a predetermined position without being dispersed throughout the refrigeration cycle circuit 2, so although the possibility of contact with the working medium 20 decreases, the dye can be reliably irradiated with the light.

The control circuit 35B is configured to switch from the first route R1 to the second route R2 by the switching device 36 and then interrupt the operation of the drive circuit 31. The control circuit 35B is configured to restart the operation of the drive circuit 31 when determining the non-steady state is no longer continuing based on at least one of a time-dependent change in a pressure, a temperature, or a product amount inside the refrigeration cycle circuit 2.

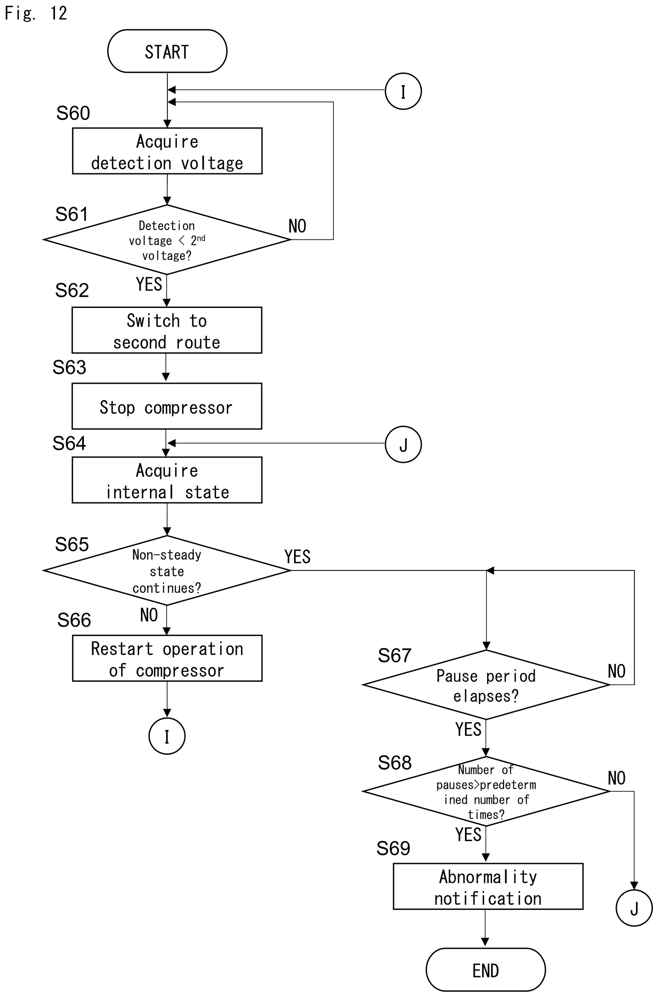

Next, a first example of the operation of the control circuit 35B of the control device 3B will be briefly described with reference to FIG. 12. FIG. 12 is a flowchart of the first example of the operation of the control circuit 35B of the control device 3B.

The control circuit 35B acquires the detection voltage from the state detection circuit 32 (S60). The control circuit 35B determines whether the detection voltage is lower than the second voltage (S61).

When the detection voltage is not lower than the second voltage (S61: NO), the process returns to step S60. Through steps S60 and S61, the control circuit 35B determines at a predetermined period whether the detection voltage is lower than the second voltage. The predetermined period is preferably shorter than a period corresponding to the reference frequency (for example, 1000 to 5000 Hz) of the inverter circuit 312.

In step S61, when the detection voltage is lower than the second voltage (S61: YES), the control circuit 35B switches from the first route R1 to the second route R2 by the switching device 36 (S62). As a result, the control circuit 35B reduces the internal pressure of the compressor 4 to a pressure not higher than the predetermined pressure. Because the discharge energy required for the progression of the disproportionation reaction increases as the internal pressure of the compressor 4 decreases, the disproportionation reaction is suppressed.

Further, the control circuit 35B stops the operation of the compressor 4 (S63). Here, the control circuit 35B sets the first protective device 33 to an OFF state to interrupt the output of the AC output power.

Next, the control circuit 35B acquires the internal state from the measurement circuit 37 (S64).

The control circuit 35B determines, based on the internal state, whether the non-steady state of the refrigeration cycle circuit 2 continues (S65).

As described above, the internal state may include at least one of a pressure, a temperature, and a product amount inside the refrigeration cycle circuit 2. The control circuit 35B determines whether the non-steady state is continuing based on a time-dependent change in at least one of the pressure, the temperature, and the product amount inside the refrigeration cycle circuit 2.

The control circuit 35B may determine that the non-steady state is continuing when an increase amount or an increase rate of the pressure inside the refrigeration cycle circuit 2 during a predetermined period is equal to or greater than a threshold value. For example, with respect to the pressure, the predetermined period may be 10 seconds, and the threshold value may be 10% as an increase amount.

The control circuit 35B may determine that the non-steady state is continuing when an increase amount of the temperature inside the refrigeration cycle circuit 2 during a predetermined period is equal to or greater than a threshold value. For example, with respect to the temperature, the predetermined period may be 10 seconds, and the threshold value may be 50 K.

The control circuit 35B may determine that the non-steady state is continuing when an increase amount or a volume fraction of a product in the refrigeration cycle circuit 2 during a predetermined period is equal to or greater than a threshold value. For example, the predetermined period and the threshold value depend on the type of the product. As one example, when the product is hydrogen fluoride, the predetermined period may be 30 seconds, and the threshold value may be 0.1% as a volume fraction. Note that, as the product amount, an emission intensity, transmittance, or absorbance can be used instead.

In step S65, when it is determined that the non-steady state of the refrigeration cycle circuit 2 is no longer continuing (S65: NO), the control circuit 35B sets the first protective device 33 to the ON state to restart outputting the AC output power, thereby restarting the operation of the compressor 4 (S66). Thereafter, the process returns to step S60.

In step S65, when it is determined that the non-steady state of the refrigeration cycle circuit 2 is continuing (S65: YES), the control circuit 35B determines whether a pause period has elapsed since it was determined that the non-steady state is continuing (S67). The pause period may be, for example, 60 seconds.

When the pause period has elapsed (S67: YES), the control circuit 35B increments the number of pauses by one and determines whether the number of pauses has exceeded a predetermined number of times (S68). The predetermined number of times may be, for example, 5.

In step S68, when it is determined that the number of pauses has exceeded the predetermined number of times (S68: YES), the control circuit 35B outputs an abnormality notification (S69). The abnormality notification indicates that an abnormality has occurred in the refrigeration cycle device 1, in which the possibility of occurrence of a disproportionation reaction is very high.

In step S68, when it is determined that the number of pauses has not exceeded the predetermined number of times (S68: NO), the process returns to step S64.

In the first example shown in FIG. 12, when restarting the operation of the compressor 4, the control circuit 35B confirms that the non-steady state of the refrigeration cycle circuit 2 is no longer continuing. Therefore, it is possible to restart the operation of the drive circuit 31 in a state in which the possibility of occurrence of a disproportionation reaction of the working medium 20 is reduced. Accordingly, it is possible to further suppress the occurrence of the disproportionation reaction of the working medium 20 and to improve the continuity of the operation of the refrigeration cycle circuit 2.

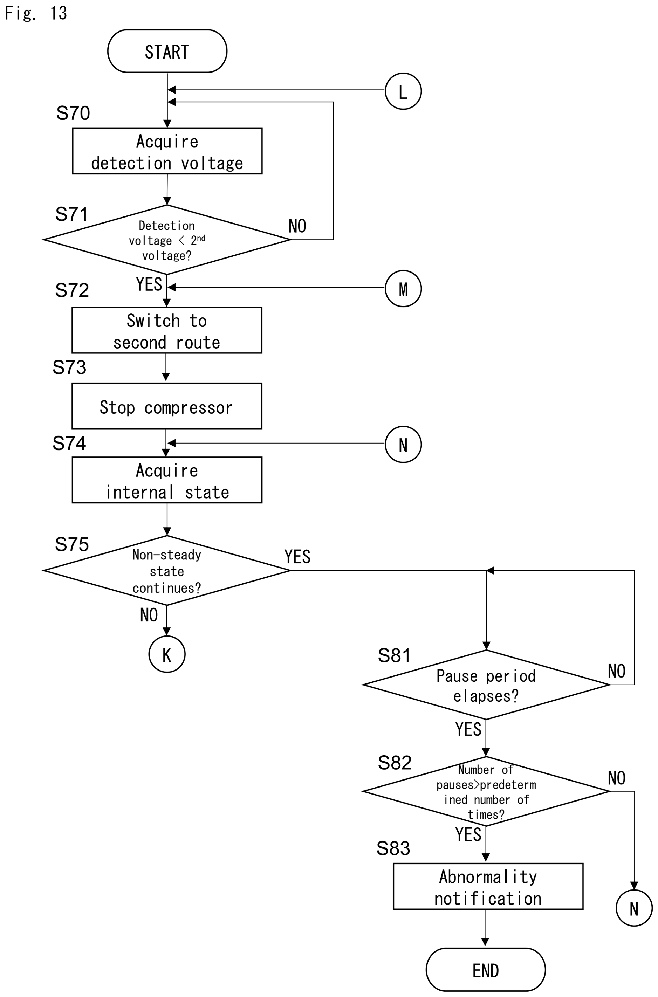

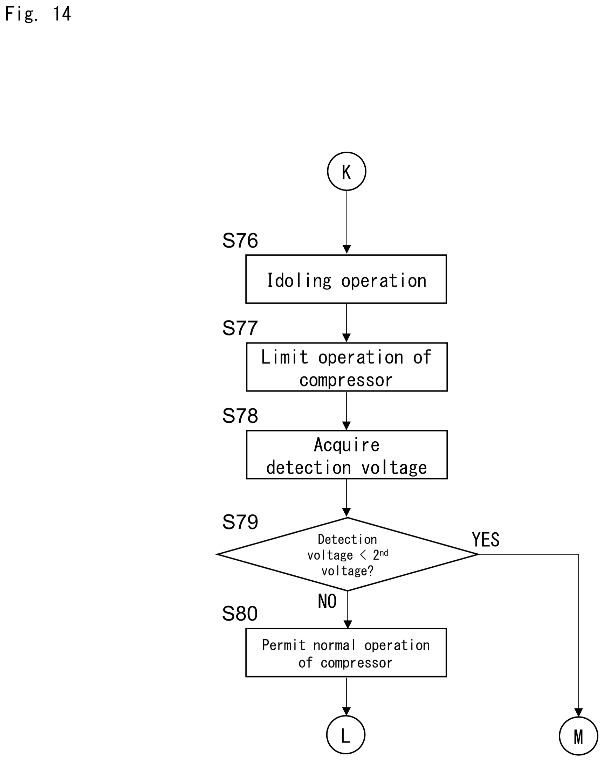

Next, a second example of the operation of the control circuit 35B of the control device 3B will be briefly described with reference to Figs. 13 and 14. Each of Figs. 13 and 14 shows a part of the flowchart of the operation of the control circuit 35B of the control device 3B, and a single flowchart is completed by combining Figs. 13 and 14.

Steps S70 to S75 in FIG. 13 are the same as steps S60 to S65 in FIG. 12, and therefore description thereof is omitted.

In step S75, when it is determined that the non-steady state of the refrigeration cycle circuit 2 is no longer continuing (S75: NO), the control circuit 35B performs an idling operation (S76). The idling operation is performed to stabilize the state of the working medium 20. For example, the idling operation circulates the working medium 20 to suppress stagnation of the refrigerant component of the working medium 20. Detailed description of such idling operation is omitted as it is well known in the art. After the idling operation (S76), the control circuit 35B restarts the operation of the compressor 4 in a state where its function is limited (S77). For example, the control circuit 35B may change the switching control of the semiconductor switching elements of the drive circuit 31 so that the setting value of the amplitude of the AC output power decreases from E to E/2, and set the first protective device 33 to the ON state to restart outputting the AC output power.

Subsequently, the control circuit 35B acquires the detection voltage from the state detection circuit 32 (S78). The control circuit 35B determines whether the detection voltage is lower than the second voltage (S79).

When the detection voltage is not lower than the second voltage (S79: NO), the control circuit 35B cancels the limitation of the function of the compressor 4 and permits the normal operation of the compressor 4 (S80). For example, the control circuit 35B cancels the reduction in the setting value of the amplitude of the AC output power and restores the setting value to E. After step S80, the process returns to step S70.

In step S79, when the detection voltage is lower than the second voltage (S79: YES), the process proceeds to step S72.

In step S75, when it is determined that the non-steady state of the refrigeration cycle circuit 2 is continuing (S75: YES), the process proceeds to step S81. Steps S81, S82, and S83 are the same as steps S67, S68, and S69 in FIG. 12, and therefore description thereof is omitted.

In the second example shown in Figs. 13 and 14, when restarting the operation of the compressor 4, the control circuit 35B confirms that the non-steady state of the refrigeration cycle circuit 2 is no longer continuing. Therefore, it is possible to restart the operation of the drive circuit 31 in a state in which the possibility of occurrence of a disproportionation reaction of the working medium 20 is reduced. Accordingly, suppression of the disproportionation reaction of the working medium 20 can be further improved and continuity of the operation of the refrigeration cycle circuit 2 can be enhanced.

Furthermore, since the operation of the compressor 4 can be restarted stepwise after the operation of the compressor 4 has been stopped, even further improvement in the suppression of the disproportionation reaction of the working medium 20 can be achieved.

### [1.3.2 ADVANTAGEOUS EFFECTS]

In the aforementioned control device 3B, the control circuit 35B is configured to switch from the first route R1 to the second route R2 by the switching device 36 and then interrupt the operation of the drive circuit 31, and restart the operation of the drive circuit 31 when determining the non-steady state is no longer continuing based on at least one of a time-dependent change in a pressure, a temperature, or a product amount inside the refrigeration cycle circuit 2. This configuration makes it possible to resume the operation of the drive circuit 31 in a state where the possibility of occurrence of a disproportionation reaction of the working medium 20 has been reduced. Accordingly, it is possible to further improve the suppression of the disproportionation reaction of the working medium 20 while also improving the continuity of the operation of the refrigeration cycle circuit 2.

### [2. VARIATIONS]

Embodiments of the present disclosure are not limited to the embodiments described above. The above embodiments may be variously modified in accordance with design and other factors, provided that the objects of the present disclosure can be achieved. Hereinafter, variations of the above embodiments will be enumerated. The variations described below may be applied in appropriate combinations.

It is noted that, in the following description, reference will be made to the reference signs used in Embodiment 1, even though the following variations may be applicable to any of Embodiments 1 to 3. This is merely for the purpose of simplifying the description and is not intended to exclude application to Embodiments 2 and 3.

In one variation, the configuration of the switching device 36 is not limited to that described in the above embodiment. For example, in the switching device 36B, the second route R2 may connect the discharge pipe 402 of the compressor 4 to a container capable of storing the working medium 20, instead of to the discharge port 11. In this way, since the working medium 20 is not released to the outside of the refrigeration cycle circuit 2, it becomes possible to resume the normal operation (the cooling operation or the heating operation) of the refrigeration cycle circuit 2.

In one variation, in the control circuit 35, the interruption of operation of the drive circuit 31 may include at least one of interrupting outputting the AC output power, interrupting outputting the DC output power, or interrupting inputting the input power. The limiting of the operation of the drive circuit 31 may include at least one of decreasing the setting value of the amplitude of the AC output power, or decreasing the setting value of the frequency of the AC output power.

In one variation, the control circuit 35 may perform the interrupting or decelerating the electric motor 42 stepwise. As one example, the control circuit 35 may reduce an effective value of the AC output power supplied to the electric motor 42 stepwise by decreasing at least one of the amplitude or the frequency of the AC output power stepwise

In one variation, the operation of the control circuit 35 is not necessarily limited to the operation represented by the flowcharts shown in Fig. 4 to Fig. 9. The flowcharts shown in Fig. 4 to Fig. 9 are merely examples.

For instance, in the operation of the control circuit 35, the processes of steps S20 to S24, namely, the processes to interrupt outputting the AC output power and interrupt inputting the input power, are not essential. In the operation of the control circuit 35, the processes of steps S25 to S29, namely, the processes to interrupt outputting the AC output power and, after the lapse of the waiting period, operate by lowering the setting value of the amplitude of the AC output power, are not essential. Likewise, in the operation of the control circuit 35, the processes of steps S30 to S36, the processes of steps S37 to S43, or the processes of steps S42 to S51, are not essential.

In steps S19, S31, S43, and S49, when restarting the operation of the compressor 4, it is preferable to confirm, before switching from the second route R2 to the first route R1 by the switching device 36, that the internal pressure of the compressor 4 is equal to or lower than a threshold value. That is, it is preferable to restart the operation of the compressor 4 when the internal pressure of the compressor 4 has decreased and the possibility of occurrence of a disproportionation reaction has become low. The internal pressure of the compressor 4 may be acquired, for example, by a pressure sensor disposed inside a refrigerant pipe in the vicinity of the discharge pipe 402 of the compressor 4 or inside the tightly sealed vessel 40 of the compressor 4. The threshold value may be set based on the internal pressure of the compressor 4 during the normal operation of the refrigeration cycle device 1.

The control circuit 35 need not necessarily interrupt or limit the operation of the drive circuit 31 in different ways depending on the time difference between the first time when the detected voltage first falls below the second voltage and the second time when the detected voltage falls below the second voltage again, or depending on the number of times that the detected voltage falls below the second voltage.

In one variation, the first protective device 33 is not limited to a circuit configuration including the switches Su, Sv, and Sw, and may include a circuit configuration that adjusts the magnitude of the AC output power, such as the voltage, output from the drive circuit 31 to the electric motor 42. The first protective device 33 may be disposed within the drive circuit 31.

In one variation, the second protective device 34 is not limited to a circuit configuration including the switches S1 and S2, and may include a circuit configuration that adjusts the magnitude of the input power, such as the voltage, input from the power supply 10 to the drive circuit 31. The second protective device 34 may be disposed within the drive circuit 31.

In one variation, the control device 3 does not necessarily need to include both the first protective device 33 and the second protective device 34; it may include either the first protective device 33 or the second protective device 34. If the drive circuit 31 has a function to adjust the AC output power, the first protective device 33 and the second protective device 34 may be omitted. For example, the control circuit 35 may interrupt outputting the AC output power to the electric motor 42 by turning on the semiconductor switching elements V1 to V4 of the inverter circuit 312 and turning off the remaining semiconductor switching elements U1 to U4 and W1 to W4. In this case, the first protective device 33 may be omitted.

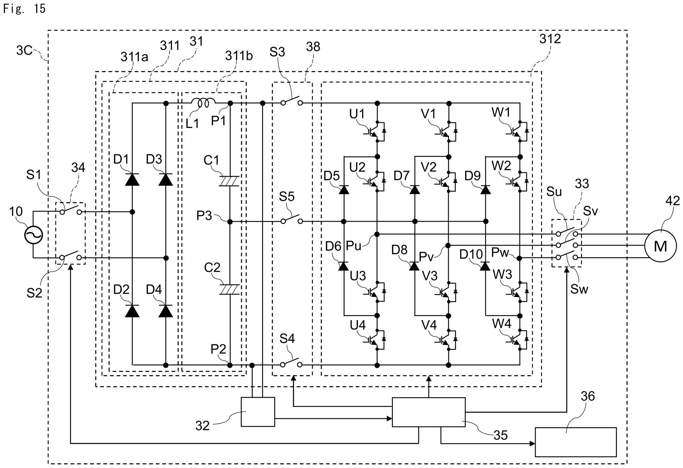

Fig. 15 shows a control device 3C according to one variation. In Fig. 15, the control device 3C includes a third protective device 38. The third protective device 38 is provided to interrupt outputting the DC output power. The third protective device 38 includes switches S3, S4, and S5 interposed between the converter circuit 311 and the inverter circuit 312 of the drive circuit 31. The switch S3 is commonly connected between the first output point P1 and the semiconductor switching elements U1, V1, and W1. The switch S4 is commonly connected between the second output point P2 and the semiconductor switching elements U4, V4, and W4. The switch S5 is commonly connected between the third output point P3 and the connection point between the diodes D5 and D6, the connection point between the diodes D7 and D8, as well as the connection point between the diodes D9 and D10. The switches S3, S4, and S5 may be any controllable switches, such as semiconductor switches or electromagnetic relays. In the ON state where the switches S3, S4, and S5 are closed, the third protective device 38 enables outputting the DC output power from the converter circuit 311 to the inverter circuit 312. In the OFF state where the switches S3, S4, and S5 are open, the third protective device 38 interrupts outputting the DC output power from the converter circuit 311 to the inverter circuit 312.

When interrupting outputting power to the compressor 4, interrupting inputting the input power, interrupting outputting the DC output power, and interrupting outputting the AC output power, in this order, provides higher safety. Therefore, after the operation of the first protective device 33, the third protective device 38 may be operated before operating the second protective device 34. When the third protective device 38 is present, the second protective device 34 may be omitted.

In one variation, the third protective device 38 is not limited to a circuit configuration including the switches S3, S4, and S5, and may include a circuit configuration for adjusting the magnitude of the DC output power, such as the voltage, output from the converter circuit 311 to the inverter circuit 312.

In one variation, the state detection circuit 32 is not limited to a configuration that detects a voltage value of the DC output power of the converter circuit 311. The state detection circuit 32 may be configured to detect a state of at least one of the compressor 4 or the drive circuit 31.

For example, the state of the drive circuit 31 may be a current value of a current flowing through each connection line corresponding to each of the three phases of the AC output power output from the inverter circuit 312 to the compressor 4. That is, the state detection circuit 32 may detect the AC output power. In this case, an abnormality in the drive circuit 31 may include an abnormality related to a leakage current detected between connection lines corresponding to the respective three phases of the AC output power. The manner of detecting an abnormality related to leakage current is well known in the art, and detailed description thereof will therefore be omitted. In another example, the state of the drive circuit 31 may be a current value of a current flowing through the drive circuit 31. As one example, the current value of the current flowing through the drive circuit 31 may include at least one of current values of output AC currents of the U-phase, V-phase, and W-phase legs of the drive circuit 31. In this case, the abnormality in the drive circuit 31 is a current abnormality. The control circuit 35 may detect a current abnormality in response to the current value of the current flowing through the drive circuit 31, which is detected by the state detection circuit 32, exceeding a predetermined current value. As another example, the current value of the current flowing through the drive circuit 31 may include a current value of a DC current flowing between the converter circuit 311 and the inverter circuit 312 of the drive circuit 31. In this case, the control circuit 35 may determine that a current abnormality in the drive circuit 31 has occurred when the current value of the DC current flowing between the converter circuit 311 and the inverter circuit 312 exceeds a predetermined current value.

For example, the state of the compressor 4 may include at least one of a phase current of the compressor 4 and a rotational speed of the electric motor 42 of the compressor 4. The current value of the phase current of the compressor 4 may include the current values of the U-phase, V-phase, and W-phase, respectively. In this case, an abnormality in the compressor 4 may include an abnormality related to a layer short of the compressor 4. The abnormality related to the layer short of the compressor 4 may include the layer short of the compressor 4 itself, an abnormality that may cause the layer short of the compressor 4, and an abnormality that may be caused by the layer short of the compressor 4. Specific examples of an abnormality related to the layer short of the compressor 4 include a layer short of the compressor 4, a leakage current of the compressor 4, and a phase loss operation of the compressor 4. When an imbalance occurs in the phase currents of the compressor 4, there is a possibility that an abnormality related to a layer short of the compressor 4 has occurred. The control circuit 35 may determine whether an abnormality in the compressor 4 has occurred based on the state of the compressor 4 detected by the state detection circuit 32. For example, the control circuit 35 may determine that an abnormality related to a layer short of the compressor 4 has occurred if an imbalance in the phase currents of the compressor 4 has occurred. Further, when a deviation in the rotational speed of the electric motor 42 of the compressor 4 occurs, there is a possibility that an abnormality related to a layer short of the compressor 4 has occurred.

In one variation, the power supply 10 may be any of various AC power sources, particularly commercial power supplies. The voltage and frequency of commercial power supplies differ depending on the country or the like, but the drive circuit 31 may be configured to drive the electric motor 42 using any of various commercial power supplies.

In one variation, the drive circuit 31 may be configured to supply the AC output power corresponding to the type or the like of the electric motor 42. The AC output power may not only be three-phase AC power, but also single-phase AC power.

In one variation, the converter circuit 311 may have a plurality of third output points. The plurality of third output points may output mutually different voltages. The inverter circuit 312 may have a plurality of groups of semiconductor switching elements respectively connected between the plurality of third output points and the electric motor 42. If the total number of the first output point P1, the second output point P2, and the plurality of third output points P3 is n, the drive circuit 31 can provide (2 × n - 1) voltage levels. By increasing n, the voltage waveform applied to the electric motor 42 by the drive circuit 31 can be made closer to a sine wave.

In one variation, the circuit configuration of the inverter circuit 312 is not limited to the circuit configuration shown in Fig. 2. The circuit configuration of the inverter circuit 312 in Fig. 2 is a so-called NPC (Neutral-Point-Clamped) type, but it may also be an ANPC (Advanced-NPC) type. The inverter circuit 312 may include a plurality of groups of semiconductor switching elements respectively connected between the plurality of output points with different voltages and the electric motor. The plurality of semiconductor switching elements constituting the plurality of semiconductor switching element groups may include semiconductor switching elements commonly included in two or more semiconductor switching element groups. The inverter circuit 312 is not necessarily required to be a multilevel inverter.

In one variation, the refrigeration cycle device is not limited to an air conditioner in which one indoor unit is connected to one outdoor unit (so-called room air conditioner (RAC)). The refrigeration cycle device 1 may be an air conditioner in which a plurality of indoor units are connected to one or more outdoor units (so-called package air conditioner (PAC), a variable refrigerant flow system (VRF)), or may be a refrigeration or refrigerating device such as a refrigerator or freezer, and is not limited to air conditioners.

### [3. ASPECTS]

As apparent from the above embodiments 1 to 10 and variations, the present disclosure includes the following aspects.

### [Aspect 1]

A control device for controlling a refrigeration cycle circuit which includes a compressor, a condenser, an expansion valve, and an evaporator and allows circulation of a working medium, comprising:
a drive circuit configured to drive the compressor;
a state detection circuit configured to detect a state of at least one of the compressor or the drive circuit;
a switching device configured to switch between a first route connecting a discharge pipe of the compressor to the condenser and a second route connecting the discharge pipe of the compressor to a predetermined space decreasing an internal pressure of the compressor to be a predetermined pressure or less; and
a control circuit configured to control the drive circuit and the switching device,
the control circuit being configured to switch from the first route to the second route by the switching device when the state of at least one of the compressor or the drive circuit detected by the state detection circuit indicates a non-steady state of the refrigeration cycle circuit.

### [Aspect 2]

The control device of claim 1, wherein the predetermined space has a pressure of 0.4 MPa or less.

### [Aspect 3]

The control device of aspect 1 or 2, wherein the predetermined pressure is 3.0 MPa or less.

### [Aspect 4]

The control device of any one of aspects 1 to 3, wherein:
the switching device is positioned between the discharge pipe of the compressor and the condenser;
the first route connects the discharge pipe of the compressor to the condenser; and
the second route connects the discharge pipe of the compressor to the predetermined space.

### [Aspect 5]

The control device of claim 4, wherein:
the refrigeration cycle circuit includes an accumulator positioned closer to a suction pipe of the compressor; and
the second route connects the discharge pipe of the compressor to an internal space of the accumulator.

### [Aspect 6]

The control device of any one of aspects 1 to 3, wherein:
the refrigeration cycle circuit includes a first heat exchanger and a second heat exchanger;
the switching device is a four-way valve configured to switch a direction in which the working medium circulates through the refrigeration cycle circuit between a first direction corresponding to a cooling operation and a second direction corresponding to a heating operation;
the first route corresponds to the second direction and connects the discharge pipe of the compressor to the second heat exchanger;
the second route corresponds to the first direction and connects the discharge pipe of the compressor to the first heat exchanger; and
the control circuit is configured to switch from the first route to the second route by the switching device and increase a degree of opening of the expansion value when the state of at least one of the compressor or the drive circuit detected by the state detection circuit indicates the non-steady state.

### [Aspect 7]

The control device of any one of aspects 1 to 6, wherein the control circuit is configured to interrupt or limit an operation of the drive circuit when the state of at least one of the compressor or the drive circuit detected by the state detection circuit indicates the non-steady state.

### [Aspect 8]

The control device of claim 7, wherein:
the drive circuit includes an inverter circuit configured to output AC output power to the compressor;
the state detection circuit is configured to detect the AC output power; and
the non-steady state includes an abnormality relating to a leakage current detectable among connecting lines individually corresponding to three phases of the AC output power.

### [Aspect 9]

The control device of claim 7, wherein:
the drive circuit includes
   a converter circuit configured to output DC output power so that a voltage of the DC output power is equal to a first voltage, based on input power from a power supply, and
   an inverter circuit configured to output AC output power to the compressor, based on the DC output power,
the state detection circuit is configured to detect the DC output power to output a detection voltage indicative of the voltage of the DC output power; and
the non-steady state includes a state where the detection voltage is lower than a second voltage equal to or lower than the first voltage.

### [Aspect 10]

The control device of aspect 9, wherein the second voltage is between 0.3 and 0.8 times the first voltage, inclusive.

### [Aspect 11]

The control device of any one of aspects 1 to 10, wherein
the control circuit is configured to
switch from the first route to the second route by the switching device and then interrupt an operation of the drive circuit, and
restart the operation of the drive circuit when determining the non-steady state is no longer continuing based on at least one of a time-dependent change in a pressure, a temperature, or a product amount inside the refrigeration cycle circuit.

### [Aspect 12]

A refrigeration cycle device comprising:
the control device of any one of aspects 1 to 11; and
the refrigeration cycle circuit.

### [Aspect 13]

The refrigeration cycle device of aspect 12, wherein the working medium contains ethylene-based fluoroolefin.

### [Aspect 14]

The refrigeration cycle device of aspect 13, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

### [Aspect 15]

The refrigeration cycle device of aspect 12, wherein the working medium further contains difluoromethane.

### [Aspect 16]

The refrigeration cycle device of aspect 12, wherein the working medium further contains a saturated hydrocarbon.

### [Aspect 17]

The refrigeration cycle device of aspect 13, wherein the working medium contains a haloalkane with 1 or 2 carbon atoms as a disproportionation inhibitor for suppressing a disproportionation reaction of the ethylene-based fluoroolefin.

### [Aspect 18]

The refrigeration cycle device of aspect 16, wherein the saturated hydrocarbon contains n-propane.

### [Aspect 19]

A control method performed by a control device for controlling a refrigeration cycle circuit which includes a compressor, a condenser, an expansion valve, and an evaporator and allows circulation of a working medium,
the control device including
   a drive circuit configured to drive the compressor, and
   a control circuit configured to control the drive circuit,
the control method comprising connecting a discharge pipe of the compressor to a predetermined space to decrease an internal pressure of the compressor to a predetermined pressure or less, when a state of at least one of the compressor or the drive circuit indicates a non-steady state of the refrigeration cycle circuit.

### [Aspect 20]

A program executed by a computer system included in a control device for controlling a refrigeration cycle circuit which includes a compressor, a condenser, an expansion valve, and an evaporator and allows circulation of a working medium,
the control device including
   a drive circuit configured to drive the compressor, and
   a control circuit configured to control the drive circuit,
the program allowing the computer system to connect a discharge pipe of the compressor to a predetermined space to decrease an internal pressure of the compressor to a predetermined pressure or less, when a state of at least one of the compressor or the drive circuit indicates a non-steady state of the refrigeration cycle circuit.

Aspects 2 to 11 and 13 to 18 are optional and not essential. Aspects 2 to 11 and 13 to 18 can be combined with aspect 19 or 20 appropriately.

### INDUSTRIAL APPLICABILITY

The present disclosure can be applied to control devices, refrigerator cycle devices, control methods, and programs. In particular, the present disclosure is applicable to a control device for a refrigeration cycle circuit including ethylene-based fluoroolefin as a refrigerant component, a refrigeration cycle device including the refrigeration cycle circuit and the control device, a control method performed by the control device, and a program (computer program) used in the control device.

### REFERENCE SIGNS LIST

- 1, 1A, 1B: Refrigeration Cycle Device
- 2: Refrigeration Cycle Circuit
- 3, 3A, 3B, 3C: Control Device
- 4: Compressor
- 401: Suction Pipe
- 402: Discharge Pipe
- 5: Frist Heat Exchanger (Condenser, Evaporator)
- 6: Expansion Valve
- 7: Second Heat Exchanger (Condenser, Evaporator)
- 9: Accumulator
- 10: Power Supply
- 11: Discharge Port
- 20: Working Medium
- 31: Drive Circuit
- 32: State Detection Circuit
- 33: First Protective Device
- 34: Second Protective Device
- 35: Control Circuit
- 36, 36A, 36B: Switching Device
- 311: Converter Circuit
- 312: Inverter Circuit

## Claims

1. A control device for controlling a refrigeration cycle circuit which includes a compressor, a condenser, an expansion valve, and an evaporator and allows circulation of a working medium, comprising:
a drive circuit configured to drive the compressor;
a state detection circuit configured to detect a state of at least one of the compressor or the drive circuit;
a switching device configured to switch between a first route connecting a discharge pipe of the compressor to the condenser and a second route connecting the discharge pipe of the compressor to a predetermined space decreasing an internal pressure of the compressor to be a predetermined pressure or less; and
a control circuit configured to control the drive circuit and the switching device,
the control circuit being configured to switch from the first route to the second route by the switching device when the state of at least one of the compressor or the drive circuit detected by the state detection circuit indicates a non-steady state of the refrigeration cycle circuit.

2. The control device of claim 1, wherein the predetermined space has a pressure of 0.4 MPa or less.

3. The control device of claim 1, wherein the predetermined pressure is 3.0 MPa or less.

4. The control device of claim 1, wherein:
the switching device is positioned between the discharge pipe of the compressor and the condenser;
the first route connects the discharge pipe of the compressor to the condenser; and
the second route connects the discharge pipe of the compressor to the predetermined space.

5. The control device of claim 4, wherein:
the refrigeration cycle circuit includes an accumulator positioned closer to a suction pipe of the compressor; and
the second route connects the discharge pipe of the compressor to an internal space of the accumulator.

6. The control device of claim 1, wherein:
the refrigeration cycle circuit includes a first heat exchanger and a second heat exchanger;
the switching device is a four-way valve configured to switch a direction in which the working medium circulates through the refrigeration cycle circuit between a first direction corresponding to a cooling operation and a second direction corresponding to a heating operation;
the first route corresponds to the second direction and connects the discharge pipe of the compressor to the second heat exchanger;
the second route corresponds to the first direction and connects the discharge pipe of the compressor to the first heat exchanger; and
the control circuit is configured to switch from the first route to the second route by the switching device and increase a degree of opening of the expansion value when the state of at least one of the compressor or the drive circuit detected by the state detection circuit indicates the non-steady state.

7. The control device of claim 1, wherein the control circuit is configured to interrupt or limit an operation of the drive circuit when the state of at least one of the compressor or the drive circuit detected by the state detection circuit indicates the non-steady state.

8. The control device of claim 7, wherein:
the drive circuit includes an inverter circuit configured to output AC output power to the compressor;
the state detection circuit is configured to detect the AC output power; and
the non-steady state includes an abnormality relating to a leakage current detectable among connecting lines individually corresponding to three phases of the AC output power.

9. The control device of claim 7, wherein:
the drive circuit includes
a converter circuit configured to output DC output power so that a voltage of the DC output power is equal to a first voltage, based on input power from a power supply, and
an inverter circuit configured to output AC output power to the compressor, based on the DC output power;
the state detection circuit is configured to detect the DC output power to output a detection voltage indicative of the voltage of the DC output power; and
the non-steady state includes a state where the detection voltage is lower than a second voltage equal to or lower than the first voltage.

10. The control device of claim 9, wherein the second voltage is between 0.3 and 0.8 times the first voltage, inclusive.

11. The control device of claim 1, wherein
the control circuit is configured to
switch from the first route to the second route by the switching device and then interrupt an operation of the drive circuit, and
restart the operation of the drive circuit when determining the non-steady state is no longer continuing based on at least one of a time-dependent change in a pressure, a temperature, or a product amount inside the refrigeration cycle circuit.

12. A refrigeration cycle device comprising:
the control device of claim 1; and
the refrigeration cycle circuit.

13. The refrigeration cycle device of claim 12, wherein the working medium contains ethylene-based fluoroolefin.

14. The refrigeration cycle device of claim 13, wherein the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

15. The refrigeration cycle device of claim 12, wherein the working medium further contains difluoromethane.

16. The refrigeration cycle device of claim 12, wherein the working medium further contains a saturated hydrocarbon.

17. The refrigeration cycle device of claim 13, wherein the working medium contains a haloalkane with 1 or 2 carbon atoms as a disproportionation inhibitor for suppressing a disproportionation reaction of the ethylene-based fluoroolefin.

18. The refrigeration cycle device of claim 16, wherein the saturated hydrocarbon contains n-propane.

19. A control method performed by a control device for controlling a refrigeration cycle circuit which includes a compressor, a condenser, an expansion valve, and an evaporator and allows circulation of a working medium,
the control device including
a drive circuit configured to drive the compressor, and
a control circuit configured to control the drive circuit,
the control method comprising connecting a discharge pipe of the compressor to a predetermined space to decrease an internal pressure of the compressor to a predetermined pressure or less, when a state of at least one of the compressor or the drive circuit indicates a non-steady state of the refrigeration cycle circuit.

20. A program executed by a computer system included in a control device for controlling a refrigeration cycle circuit which includes a compressor, a condenser, an expansion valve, and an evaporator and allows circulation of a working medium,
the control device including
a drive circuit configured to drive the compressor, and
a control circuit configured to control the drive circuit,
the program allowing the computer system to connect a discharge pipe of the compressor to a predetermined space to decrease an internal pressure of the compressor to a predetermined pressure or less, when a state of at least one of the compressor or the drive circuit indicates a non-steady state of the refrigeration cycle circuit.
